# EUROPEAN PATENT APPLICATION

(11) **EP 4 366 045 A1**
(43) Date of publication of application: **08.05.2024**
(21) Application number: 22833246.6
(22) Date of filing: 29.06.2022
(51) Int. Cl.: H01M 50/119, H01G 11/78, H01M 10/04, H01M 50/103, H01M 50/105, H01M 50/129, H01M 50/131, H01M 50/145, H01M 50/15, H01M 50/159, H01M 50/176

(54) **POWER STORAGE DEVICE AND METHOD FOR MANUFACTURING POWER STORAGE DEVICE**

(30) Priority: 29.06.2021 JP 2021107646
(71) Applicant: DAI NIPPON PRINTING CO., LTD., Tokyo 162-8001 (JP)
(72) Inventor: TAKAHAGI, Atsuko, Tokyo 162-8001 (JP); HAYASHI, Shinji, Tokyo 162-8001 (JP); HIRAKI, Kenta, Tokyo 162-8001 (JP); SASAKI, Miho, Tokyo 162-8001 (JP); YAMAZAKI, Masayasu, Tokyo 162-8001 (JP)
(74) Representative: Müller-Boré & Partner Patentanwälte PartG mbB
(86) International application number: PCT/JP2022/026084
(87) International publication number: WO 2023/277100

(57) **Abstract**

This power storage device comprises an electrode body and an exterior body. The exterior body seals the electrode body. The exterior body is configured from a film-like exterior member. The exterior body includes a first sealed part sealed by joining surfaces which face each other in a state of being wound around the electrode body. The area of a first surface is larger than the area of a second surface. The first sealed part does not overlap the first surface in a plan view. The exterior body is configured from a laminate comprising at least a base material layer, a barrier layer, and a heat-fusible resin layer in the stated order. The barrier layer includes an aluminum alloy foil satisfying a composition of 0.2-2.0 mass% of Fe, and 0.1-5.0 mass% of Mg.

## Description

### TECHNICAL FIELD

The present invention relates to an electrical storage device, and a method for manufacturing an electrical storage device.

### BACKGROUND ART

Japanese Patent No. 4509242 (Patent Document 1) discloses a secondary battery. In this secondary battery, an electrode assembly is sealed in a bag formed of an exterior member (laminate film) (see Patent Document 1).

### PRIOR ART DOCUMENT

### PATENT DOCUMENT

Patent Document 1: Japanese Patent No. 4509242

### SUMMARY OF THE INVENTION

### PROBLEMS TO BE SOLVED BY THE INVENTION

In the secondary battery disclosed in Patent Document 1, a seal portion of an exterior member is provided on a surface having a large area. Since the seal portion is a region where the exterior members are stacked, the seal portion is thicker than other regions. If another secondary battery is stacked on a surface provided with the seal portion, the upper secondary battery may tilt while being supported on the sealed portion. As a result, the unevenness of the distribution of pressure applied to the lower secondary battery increases.

In a portion where the exterior member of the electrical storage device is bent, fine cracks and pinholes are generated in a heat-sealable resin layer located at the innermost layer, and if an external terminal and an aluminum alloy foil of the exterior member of the electrical storage device come close to each other or come into contact with each other, resulting in occurrence of a short circuit, there is a possibility that an electrical current passes between the aluminum alloy foil of the exterior member of the electrical storage device and the external terminal through an electrolytic solution and an electrolyte which are in contact with the heat-sealable resin layer, so that the aluminum alloy foil is corroded by forming an alloy with lithium ions in the electrolytic solution. In particular, if the aluminum alloy foil and the negative electrode terminal are short-circuited through the electrolytic solution, the aluminum alloy foil is likely to corrode. If the aluminum alloy foil corrodes, a defect such as expansion of the aluminum alloy foil occurs, leading to deterioration of the performance of the electrical storage device.

The present invention has been made for solving the above-described problems, and an object of the present invention is to provide an electrical storage device which enables suppression of unevenness of the distribution of pressure applied to an adjacent electrical storage device when a plurality of electrical storage devices are stacked and which has corrosion resistance, and a method for manufacturing the electrical storage device.

### MEANS FOR SOLVING THE PROBLEM

An electrical storage device according to an aspect of the present invention includes an electrode assembly and an outer packaging. The outer packaging seals the electrode assembly. The outer packaging includes a film-shaped exterior member. The outer packaging includes a first seal portion sealed by joining the opposed surfaces of the exterior member wound around the electrode assembly, a first surface, and a second surface. An area of the first surface is larger than an area of the second surface. The first seal portion does not overlap the first surface in plan view. The exterior member includes a laminate including at least a base material layer, a barrier layer, and a heat-sealable resin layer in the stated order. The barrier layer includes an aluminum alloy foil that satisfies the composition of a Fe content of 0.2 mass% or more and 2.0 mass% or less, and a Mg content of 0.1 mass% or more and 5.0 mass% or less.

In this electrical storage device, the first seal portion does not overlap the first surface with a large area in plan view. That is, the first seal portion does not exist on the first surface with a large area. Therefore, even if just above or beside the electrical storage device, another electrical storage device is disposed on the first surface, the other electrical storage device does not tilt. As a result, the electrical storage device enables suppression of unevenness of the distribution of pressure applied to an adjacent electrical storage device when a plurality of electrical storage devices are stacked. Since the aluminum alloy foil of the exterior member has the above-described configuration, the aluminum alloy foil is unlikely to corrode.

In the electrical storage device, the first seal portion may be bent so as to come into contact with the second surface.

In the electrical storage device, the first seal portion may cover substantially the entire second surface in a state of being bent so as to come into contact with the second surface.

In this electrical storage device, a large connection width can be secured in the first seal portion because the first seal portion covers substantially the entire second surface.

The electrical storage device may further include an electrode terminal electrically connected to the electrode assembly, the outer packaging may further include a second seal portion sealed with the electrode terminal held therein, a part of the electrode terminal may be located outside the outer packaging, and a root of the part may be located to extend over substantially half a thickness of the electrical storage device in a thickness direction of the electrical storage device.

In this electrical storage device, a part of the electrode terminal, which is outside the outer packaging, is located to extend over substantially half the thickness of the electrical storage device in the thickness direction of the electrical storage device. Therefore, in this electrical storage device, for example, it is possible to reduce a difference between the longest and the shortest of distances between a plurality of electrodes in the electrode assembly and the electrode terminal as compared to a case where the part outside the outer packaging is substantially identical in location to the first surface in the thickness direction of the electrical storage device.

In the electrical storage device, a region with a high joining force between the surfaces and a region with a low joining force between the surfaces may be arranged along a boundary between the first surface and the second surface in the first seal portion.

In the electrical storage device, a region with a large thickness and a region with a small thickness may be arranged along a boundary between the first surface and the second surface in the first seal portion.

The electrical storage device may further include an electrode terminal electrically connected to the electrode assembly, and the first seal portion may be sealed with the electrode terminal held therein.

The electrical storage device may further include an electrode terminal electrically connected to the electrode assembly, and a lid to which the electrode terminal is attached, and the outer packaging may further include a second seal portion sealed in a state of being joined to the lid.

In the electrical storage device, the lid may include a first surface facing the electrode assembly, and a second surface on a side opposite to the first surface, and the second seal portion may include a portion where the outer packaging and the second surface are joined.

The electrical storage device may further include a lid, the outer packaging may further include a second seal portion sealed in a state of being joined to the lid, the lid may include a metal portion that is a portion where a metal layer is exposed to a surface thereof or a portion formed of a metal material, and the metal portion and the electrode assembly may be welded to each other.

The electrical storage device may further include an electrode terminal electrically connected to the electrode assembly, and the outer packaging may further include a bulging portion protruding outward, and a second seal portion sealed by the bulging portion with the electrode terminal held therein.

In the electrical storage device, the direction along the boundary between the first surface and the second surface may be a direction perpendicular to a machine direction of the exterior member.

In this electrical storage device, the direction along the boundary between the first surface and the second surface is a direction perpendicular to the machine direction of the exterior member when the first seal portion is bent along the boundary between the first surface and the second surface. Therefore, in this electrical storage device, it is possible to reduce a possibility that the first seal portion is broken by bending of the first seal portion because the exterior member is unlikely to break even if a fold line is formed in a direction perpendicular to the machine direction of the exterior member.

An electrical storage device according to another aspect of the present invention includes an electrode assembly, an electrode terminal electrically connected to the electrode assembly, and an outer packaging that seals the electrode assembly. The outer packaging includes a film-shaped exterior member, and includes a long side and a short side in plan view. The electrode terminal is disposed so as to extend along the long side.

An electrical storage device according to another aspect of the present invention includes an electrode assembly and an outer packaging. The outer packaging seals the electrode assembly. In the outer packaging, the exterior member includes a film-shaped exterior member. The outer packaging includes a piece portion formed by joining the opposed surfaces of the exterior member wound around the electrode assembly. In the piece portion, a space is formed in which the opposed surfaces are not joined. In the piece portion, a region where the opposed surfaces are joined and a region where the opposed surfaces are not joined are arranged in the vicinity of a boundary between the surfaces. The exterior member includes a laminate including at least a base material layer, a barrier layer, and a heat-sealable resin layer in the stated order. The barrier layer includes an aluminum alloy foil that satisfies the composition of a Fe content of 0.2 mass% or more and 2.0 mass% or less, and a Mg content of 0.1 mass% or more and 5.0 mass% or less.

Gas may be generated in the outer packaging. In this electrical storage device, a space is formed in the piece portion, and a region where the opposed surfaces are joined and a region where the opposed surfaces are not joined are arranged in the vicinity of a boundary between the surfaces. Therefore, in this electrical storage device, gas in the outer packaging can be discharged through the piece portion by releasing the outer packaging from the sealed state in the piece portion. By sealing the outer packaging again, the electrical storage device cleared of gas can be manufactured. Since the aluminum alloy foil of the exterior member has the above-described configuration, the aluminum alloy foil is unlikely to corrode.

In the electrical storage device, the composition of the aluminum alloy foil may satisfy a Si content of 0.5 mass% or less.

In the electrical storage device, the composition of the aluminum alloy foil may satisfy a Mg content of 0.1 mass% or more and 1.5 mass% or less, and the electrical storage device may contain Mg in an amount of 5.0 atm% or more on at least one surface of the aluminum alloy foil, and have an oxide film with a thickness of 80 Å or more on at least one surface of the aluminum alloy foil.

In the electrical storage device, the composition of the aluminum alloy foil may satisfy a Mg content of 0.1 mass% or more and 1.5 mass% or less, and the aluminum alloy foil may have a tensile strength of 110 MPa or more and 180 MPa or less, and a breaking elongation of 10% or more.

In the electrical storage device, the composition of the aluminum alloy foil may satisfy a Mg content of more than 1.5 mass% or more and 5.0 mass% or less, and the aluminum alloy foil may contain Mg in an amount of 15.0 atm% or more on at least one surface thereof, and have an oxide film with a thickness of 120 Å or more on at least one surface thereof.

In the electrical storage device, the composition of the aluminum alloy foil may satisfy a Mg content of more than 1.5 mass% or more and 5.0 mass% or less, and have a tensile strength of 180 MPa or more, and a breaking elongation of 15% or more.

In the electrical storage device, the aluminum alloy foil may have a texture orientation density of 15 or less in each of Copper orientation and R orientation.

In the electrical storage device, the aluminum alloy foil may have an average crystal grain size of 25 µm or less.

In the electrical storage device, the aluminum alloy foil may contain Al and an inevitable impurity as a balance, and satisfy the relationship of L1/L2 > 3.0, where L1 is a length of a high-angle grain boundary and L2 is a low-angle grain boundary per unit area as measured by an electron backscatter diffraction method.

In the electrical storage device, the aluminum alloy foil may contain Mn in an amount of 0.1 mass% as an inevitable impurity.

A method for manufacturing an electrical storage device according to another aspect of the present invention is a method for manufacturing an electrical storage device from an incomplete article. The incomplete article includes an electrode assembly and an outer packaging. The outer packaging seals the electrode assembly. The outer packaging includes a film-shaped exterior member. The outer packaging includes a piece portion formed by joining the peripheral edges of the opposed surfaces of the exterior member wound around the electrode assembly. In the piece portion, a space is formed in which the opposed surfaces are not joined. In the piece portion, a region where the opposed surfaces are joined and a region where the opposed surfaces are not joined are arranged in the vicinity of a boundary between the surfaces. The exterior member includes a laminate including at least a base material layer, a barrier layer, and a heat-sealable resin layer in the stated order. The barrier layer includes an aluminum alloy foil that satisfies the composition of a Fe content of 0.2 mass% or more and 2.0 mass% or less, and a Mg content of 0.1 mass% or more and 5.0 mass% or less. The manufacturing method includes the steps of releasing the outer packaging from the sealed state in the piece to discharge gas to the outside of the outer packaging, and sealing the outer packaging again by joining the opposed surfaces in at least a part of the piece portion.

By this method for manufacturing an electrical storage device, an electrical storage device cleared of gas can be manufactured by discharging gas through the piece portion and sealing the outer packaging again.

### ADVANTAGES OF THE INVENTION

According to the present invention, it is possible to provide an electrical storage device which enables suppression of unevenness of the distribution of pressure applied to a lower electrical storage device when a plurality of electrical storage devices are stacked and which has corrosion resistance, and a method for manufacturing the electrical storage device.

### BRIEF DESCRIPTION OF THE DRAWINGS

Fig. 1 is a perspective view schematically showing an electrical storage device according to Embodiment 1.
Fig. 2 is a plan view schematically showing the electrical storage device.
Fig. 3A is a side view schematically showing the electrical storage device.
Fig. 3B is a sectional view showing an example of a layer configuration of an exterior member.
Fig. 3C is a sectional view showing an example of a layer configuration of an exterior member.
Fig. 3D is a sectional view showing an example of a layer configuration of an exterior member.
Fig. 3E is a sectional view showing an example of a layer configuration of an exterior member.
Fig. 3F(A) is a micrograph showing a surface of an aluminum alloy foil used for evaluation of corrosion resistance, where the surface is not corroded.

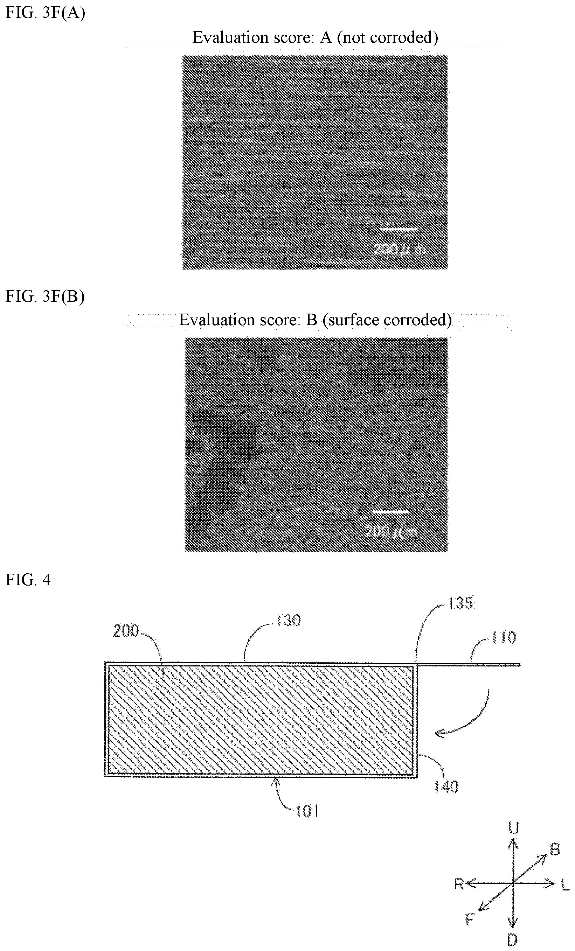

Fig. 3F(B) is a micrograph showing a surface of an aluminum alloy foil used for evaluation of corrosion resistance, where the surface is corroded.
Fig. 4 is a view showing, from the side, a state in which an exterior member is wound around an electrode assembly in the course of manufacturing the electrical storage device according to Embodiment 1.

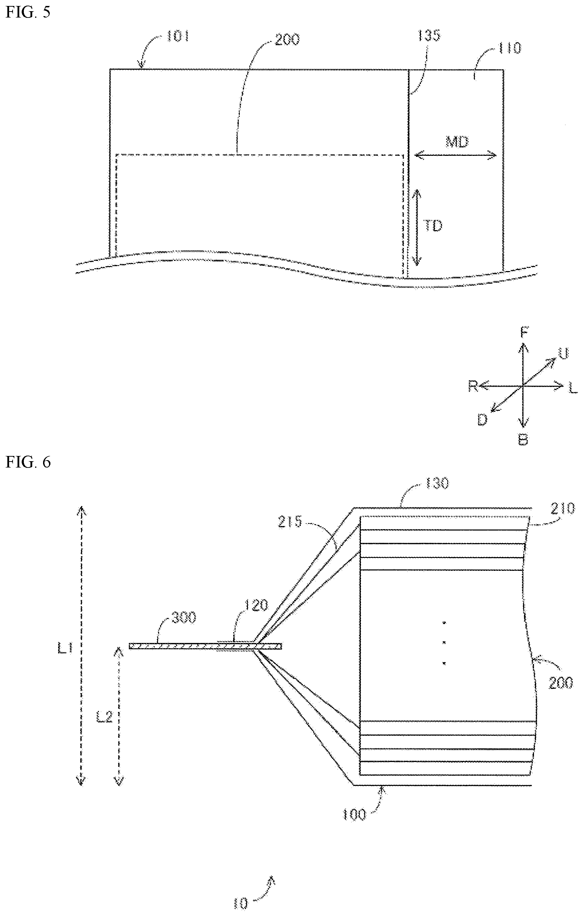

Fig. 5 is a view showing, from below, a state in which an exterior member is wound around an electrode assembly in the course of manufacturing the electrical storage device according to Embodiment 1.

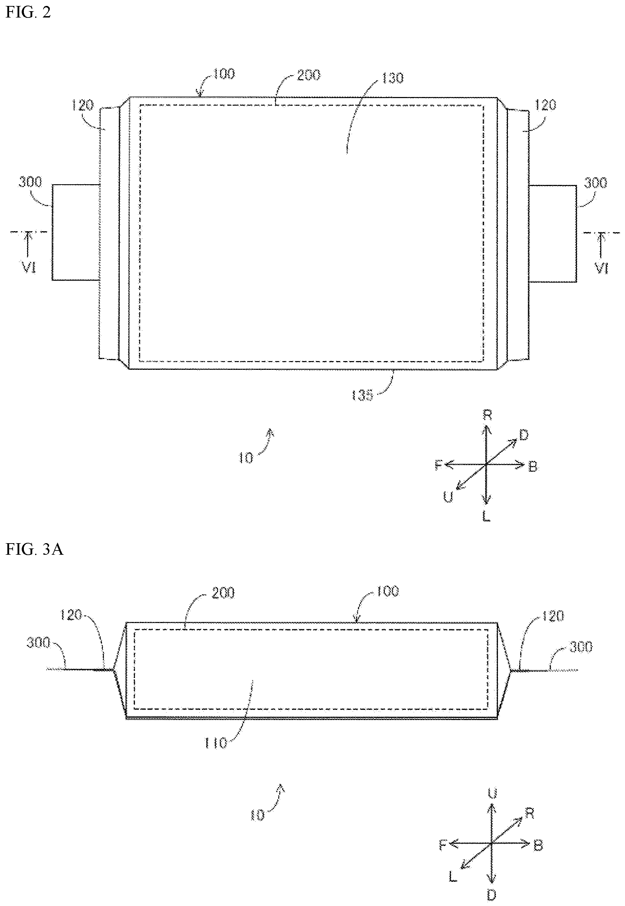

Fig. 6 is a sectional view taken along VI-VI in Fig. 2.

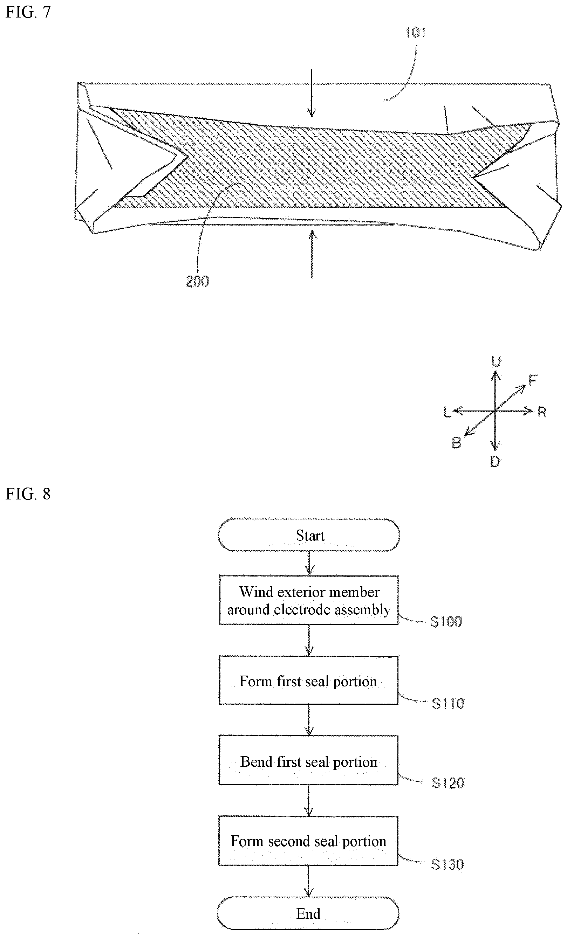

Fig. 7 is a diagram for illustrating a method for forming a second seal portion.
Fig. 8 is a flowchart showing a procedure for manufacturing the electrical storage device according to Embodiment 1.

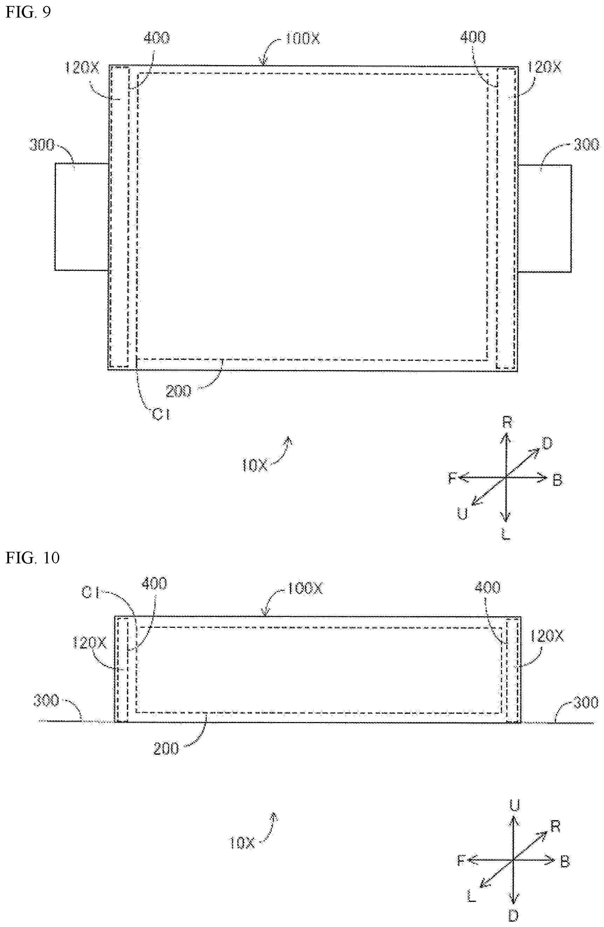

Fig. 9 is a plan view schematically showing an electrical storage device according to Embodiment 2.
Fig. 10 is a side view schematically showing the electrical storage device.

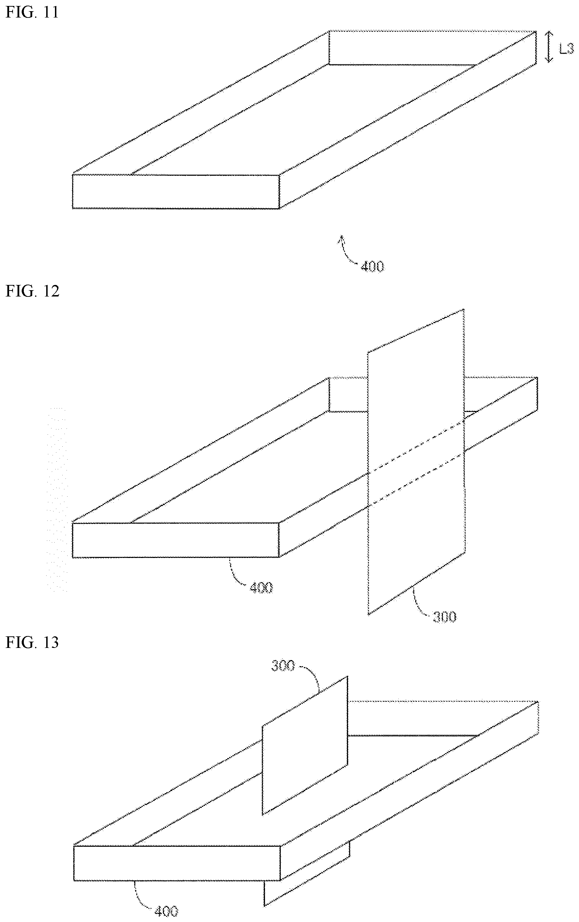

Fig. 11 is a perspective view schematically showing a lid.
Fig. 12 is a view showing a first example in which a lid and an electrode terminal are integrally formed.
Fig. 13 is a view showing a second example in which a lid and an electrode terminal are integrally formed.

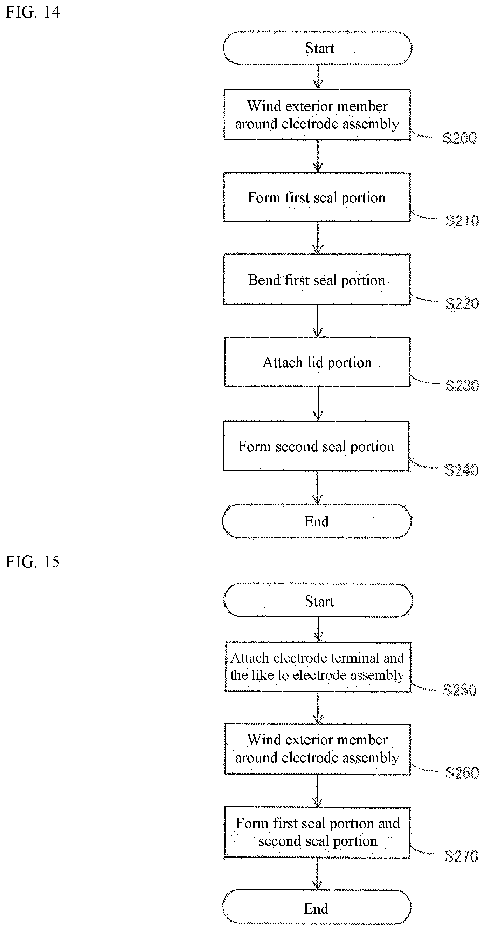

Fig. 14 is a flowchart showing a procedure for manufacturing the electrical storage device according to Embodiment 2.
Fig. 15 is a flowchart showing another procedure for manufacturing the electrical storage device according to Embodiment 2.

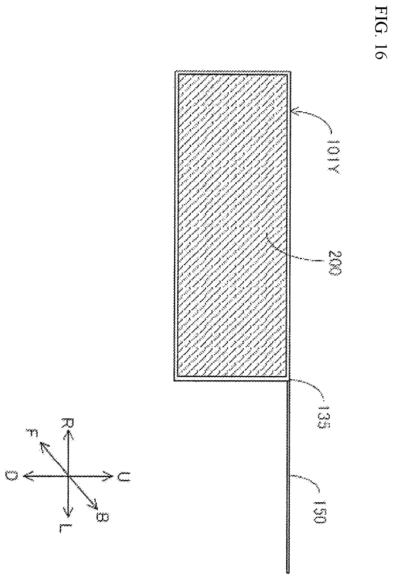

Fig. 16 is a view showing, from the side, a state in which an exterior member is wound around an electrode assembly in Embodiment 3.

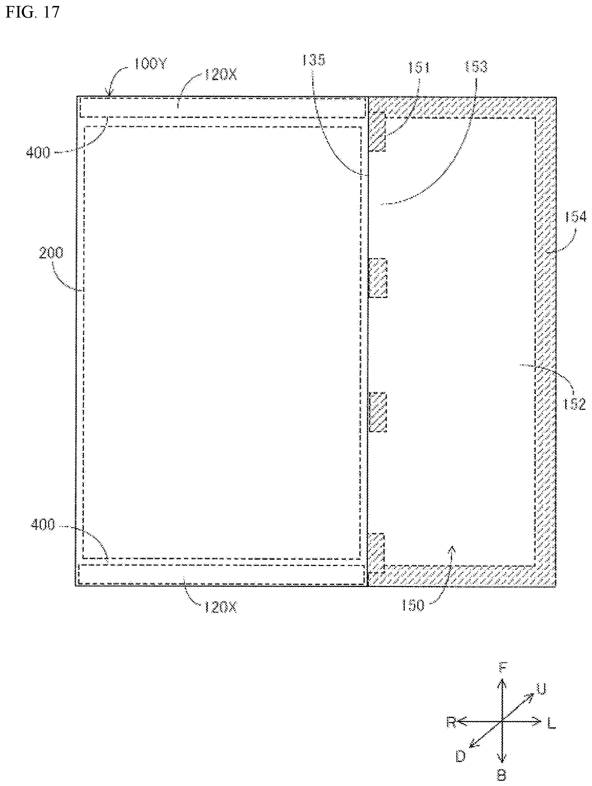

Fig. 17 is a view showing, from below, a state in which an exterior member is wound around an electrode assembly and a lid is attached to the exterior member in Embodiment 3.

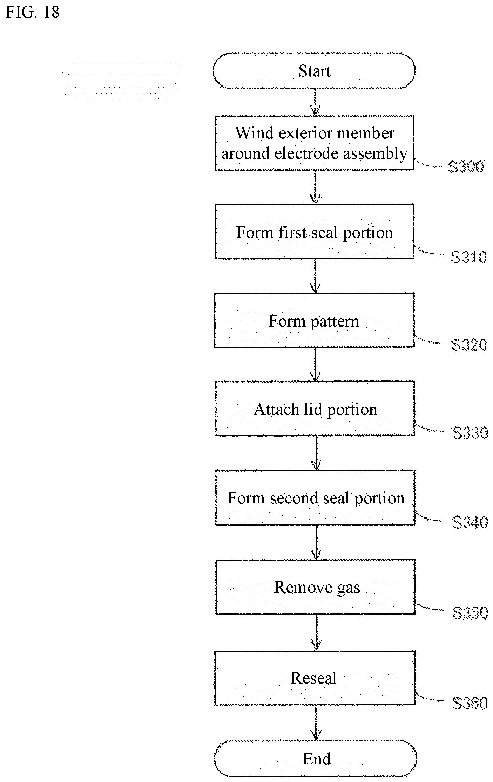

Fig. 18 is a flowchart showing a procedure for manufacturing the electrical storage device according to Embodiment 3.

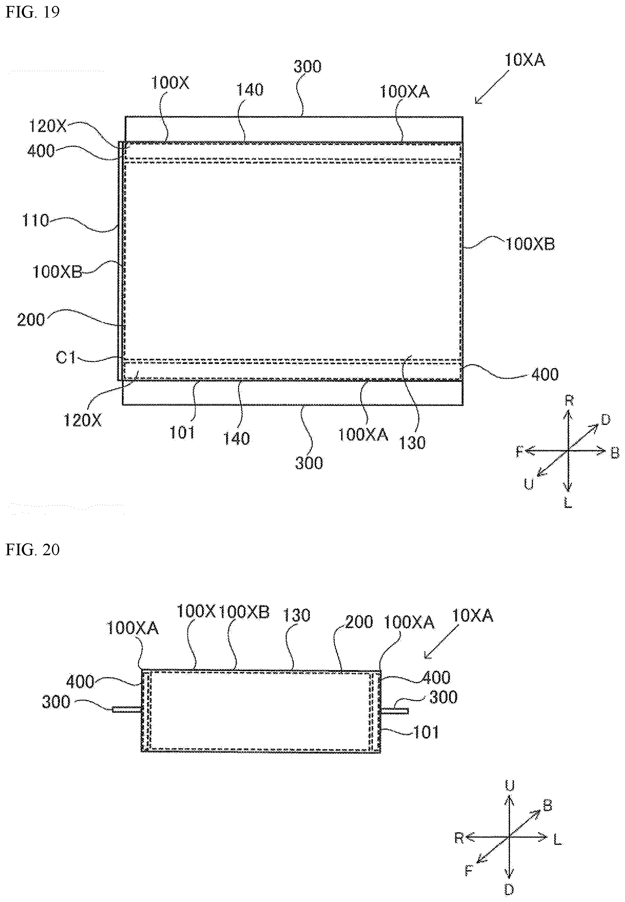

Fig. 19 is a plan view schematically showing an electrical storage device according to Embodiment 4.
Fig. 20 is a side view schematically showing an electrical storage device according to Embodiment 4.

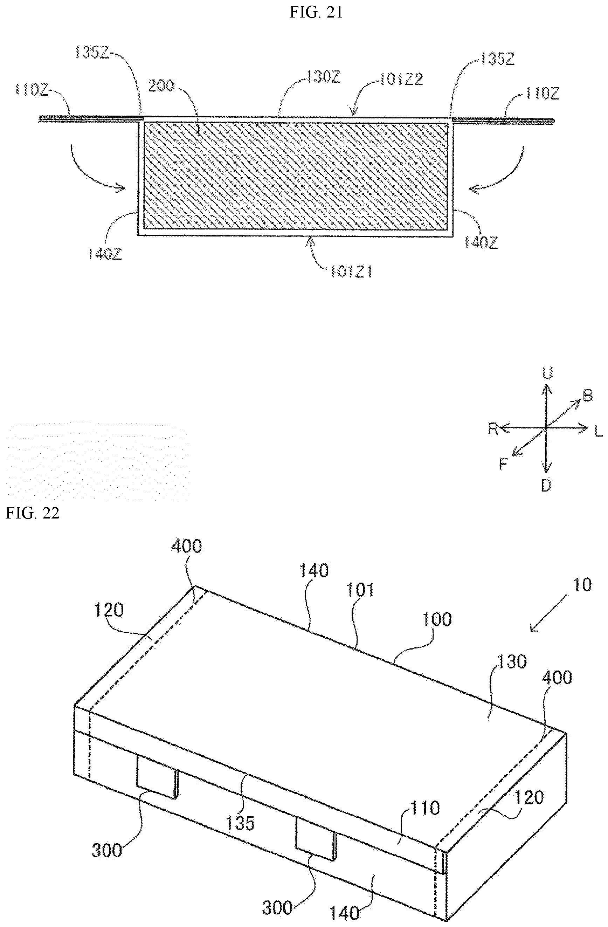

Fig. 21 is a view showing a state in which an exterior member is wound around an electrode assembly in the modification.
Fig. 22 is a perspective view schematically showing an electrical storage device in the modification.

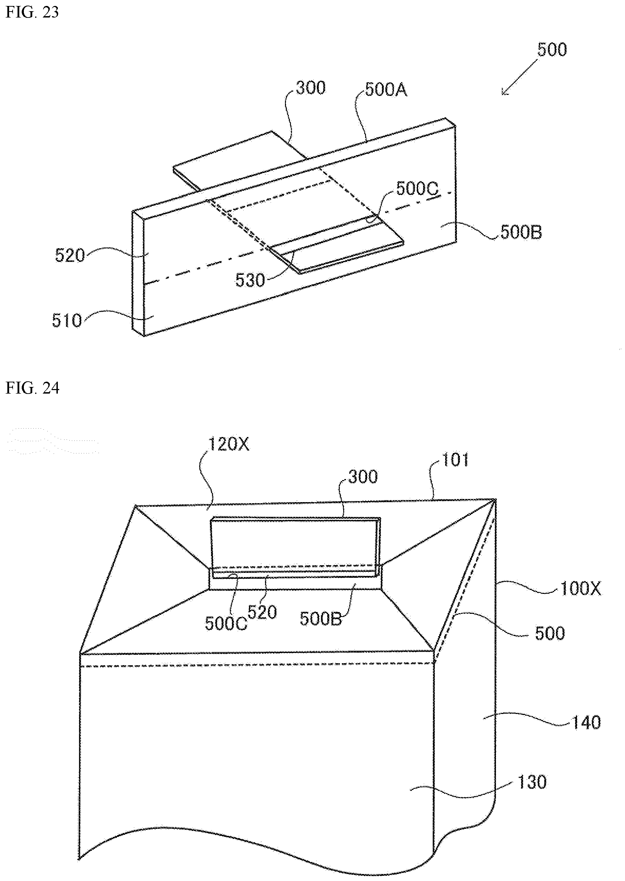

Fig. 23 is a perspective view schematically showing a lid in the modification, and an electrode terminal attached to the lid.
Fig. 24 is a perspective view schematically showing an electrical storage device in which the lid of Fig. 23 is attached.

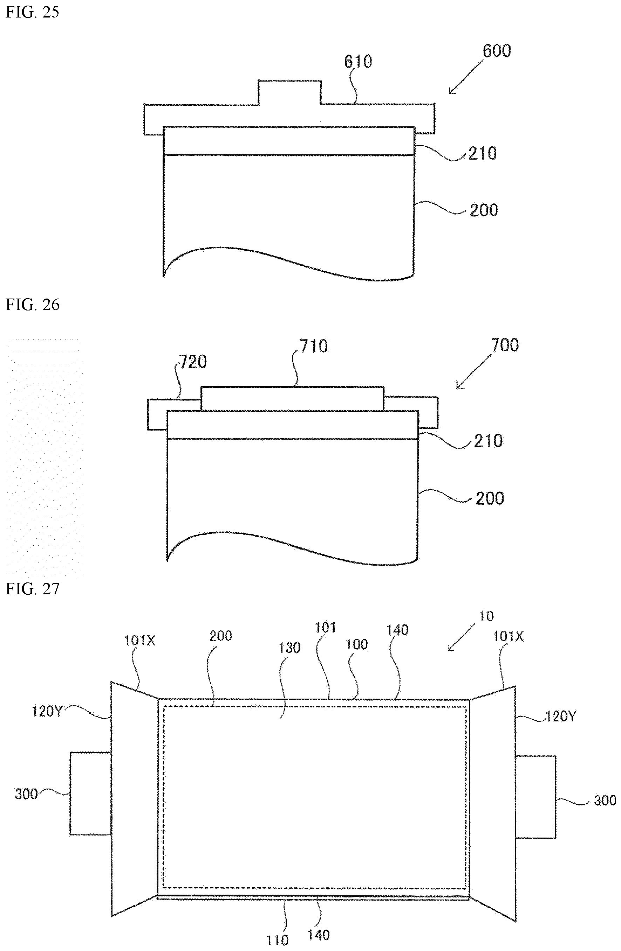

Fig. 25 is a front view schematically showing a lid in another modification.
Fig. 26 is a front view schematically showing a lid in still another modification.
Fig. 27 is a plan view schematically showing an electrical storage device in still another modification.

### EMBODIMENTS OF THE INVENTION

Hereinafter, embodiments of the present invention will be described in detail with reference to the drawings. The same or equivalent parts in the drawings are given the same symbols, and are not duplicately described. In the present specification, a numerical range indicated by the term "A to B" means "A or more" and "B or less". For example, the expression of "2 to 15 mm" means 2 mm or more and 15 mm or less.

### [1. Embodiment 1]

### <1-1. Configuration of electrical storage device>

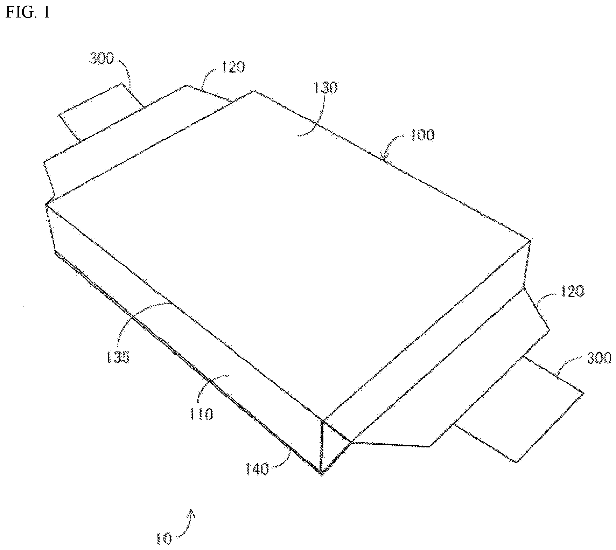

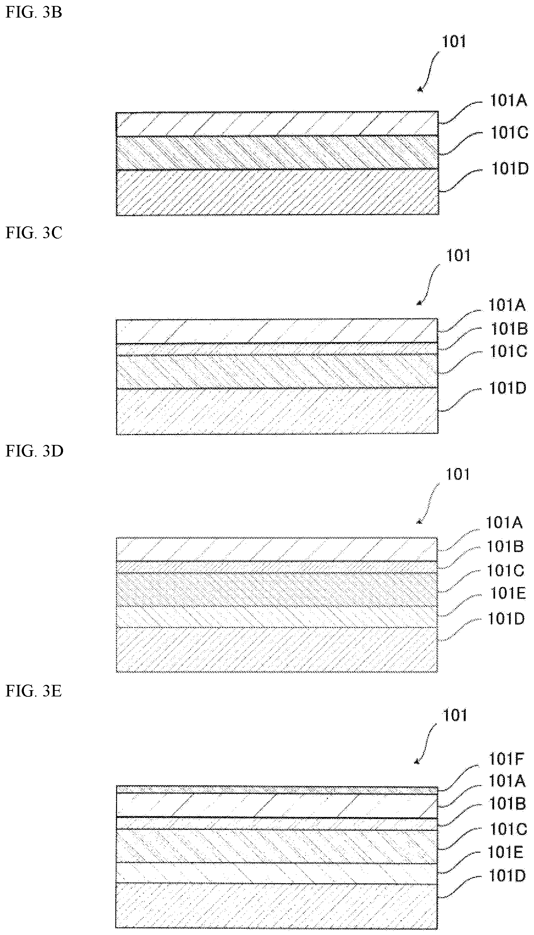

Fig. 1 is a perspective view schematically showing an electrical storage device 10 according to Embodiment 1. Fig. 2 is a plan view schematically showing the electrical storage device 10. Fig. 3A is a side view schematically showing the electrical storage device 10. Figs. 3B to 3E are sectional views showing a layer configuration of an exterior member 101 of the electrical storage device 10. In Figs. 2 and 3A, the direction of arrow UD indicates a thickness direction of the electrical storage device 10, and the direction of arrow LR indicates a width direction of the electrical storage device 10. The direction of arrow FB indicates a depth direction of the electrical storage device 10. The direction indicated by each of arrows UD, LR and FB is also shared across the subsequent drawings.

Referring to Figs. 1, 2 and 3, the electrical storage device 10 includes an electrode assembly 200, an outer packaging 100, and a plurality of electrode terminals (two electrode terminals) 300. The electrode assembly 200 includes electrodes (a positive electrode and a negative electrode), a separator and the like which constitute an electrical storage member such as a lithium ion battery, a capacitor or an all-solid-state battery. The electrode assembly 200 has a substantially rectangular parallelepiped shape. The term "substantially rectangular parallelepiped" means not only a perfect rectangular parallelepiped, but also a three-dimensional shape which can be regarded as a rectangular parallelepiped if the shape of a part of an outer surface is modified.

The electrode terminal 300 is a metal terminal used for input/output of electric power in the electrode assembly 200. One end part of the electrode terminal 300 is electrically connected to an electrode (positive electrode or negative electrode) in the electrode assembly 200, and the other end part protrudes outward from an end edge of the outer packaging 100.

The metal material forming the electrode terminal 300 is, for example, aluminum, nickel or copper. For example, when the electrode assembly 200 is a lithium ion battery, the electrode terminal 300 connected to the positive electrode is typically formed of aluminum or the like, and the electrode terminal 300 connected to the negative electrode is typically formed of copper, nickel or the like.

The outer packaging 100 includes a film-shaped exterior member 101 (Fig. 4 etc.), and seals the electrode assembly 200. In the electrical storage device 10, the outer packaging 100 is formed by winding the exterior member 101 around the electrode assembly 200 to seal an opening portion.

For example, there is a method in which a housing portion (recess) for housing the electrode assembly 200 is formed in the exterior member 101 through cold molding. However, it is not always easy to form a deep housing portion by such a method. When a deep housing portion (recess) (for example, a depth of 15 mm) is formed by cold molding, there is a high possibility that pinholes and cracks are generated in the exterior member, leading to deterioration of battery performance. On the other hand, in the outer packaging 100, the electrode assembly 200 is sealed by winding the exterior member 101 around the electrode assembly 200, so that the electrode assembly 200 can be easily sealed regardless of the thickness of the electrode assembly 200. For reducing a dead space between the electrode assembly 200 and the exterior member 101 in order to improve the volume energy density of the electrical storage device 10, it is preferable that the exterior member 101 is wound around the outer surface of the electrode assembly 200 with the former being in contact with the latter. In an all-solid-state battery, it is necessary to eliminate a space between the electrode assembly 200 and the exterior member 101 from the viewpoint that even application of high pressure from the outer surface of the battery is required for exhibiting battery performance, and therefore it is preferable that the exterior member 101 is wound around the outer surface of the electrode assembly 200 with the former being in contact with the latter.

As shown in, for example, Figs. 3B to 3E, the exterior member 101 includes a laminate including at least a base material layer 101A, a barrier layer 101C and a heat-sealable resin layer 101D in the stated order. In the exterior member 101, the base material layer 101A is on the outermost layer side, and the heat-sealable resin layer 101D is an innermost layer. In construction of an electrical storage device using the exterior member 101 and an electrical storage device element, the electrode assembly 200 is housed in a space formed by heat-sealing the peripheral edge portions of the heat-sealable resin layers 101D of the exterior member 101 with the heat-sealable resin layers 101D opposed to each other.

The barrier layer 101C includes an aluminum alloy foil. That is, the barrier layer 101C can be made from an aluminum alloy foil. In the exterior member 101 of the present embodiment which includes an aluminum alloy foil satisfying a predetermined composition and predetermined characteristics described later, the exterior member is excellent in followability at corners and the like, corrosion of the aluminum alloy foil is effectively suppressed, and excellent mechanical strength is exhibited.

As shown in, for example, Figs. 3B to 3E, the exterior member 101 may have an adhesive agent layer 101B between the base material layer 101A and the barrier layer 101C if necessary for the purpose of, for example, improving bondability between these layers. As shown in, for example, Figs. 3D and 3E, an adhesive layer 101E may be present between the barrier layer 101C and the heat-sealable resin layer 101D if necessary for the purpose of, for example, improving bondability between these layers. As shown in Fig. 3E, a surface coating layer 101F or the like may be provided on the outer side of the base material layer 101A (on a side opposite to the heat-sealable resin layer 101D side) if necessary.

The thickness of the laminate forming the exterior member 101 is not particularly limited, and is, for example, 190 µm or less, preferably about 180 µm or less, about 155 µm or less, or about 120 µm or less, from the viewpoint of cost reduction, energy density improvement, and the like. The thickness of the laminate forming the exterior member 101 is preferably about 35 µm or more, about 45 µm or more, or about 60 µm or more, from the viewpoint of maintaining a function of the exterior member 101, i.e. protection of the electrode assembly 200. The laminate forming the exterior member 101 for electrical storage devices is preferably in the range of, for example, about 35 to 190 µm, about 35 to 180 µm, about 35 to 155 µm, about 35 to 120 µm, about 45 to 190 µm, about 45 to 180 µm, about 45 to 155 µm, about 45 to 120 µm, about 60 to 190 µm, about 60 to 180 µm, about 60 to 155 µm, and about 60 to 120 µm, particularly preferably about 60 to 155 µm.

In the exterior member 101, the ratio of the total thickness of the base material layer 101A, the adhesive agent layer 101B provided if necessary, the barrier layer 101C, the adhesive layer 101E provided if necessary, the heat-sealable resin layer 101D, and the surface coating layer 101F provided if necessary to the thickness (total thickness) of the laminate forming the exterior member 101 is preferably 90% or more, more preferably 95% or more, still more preferably 98% or more. As a specific example, when the exterior member 101 includes the base material layer 101A, the adhesive agent layer 101B, the barrier layer 101C, the adhesive layer 101E and the heat-sealable resin layer 101D, the ratio of the total thickness of these layers to the thickness (total thickness) of the laminate forming the exterior member 101 is preferably 90% or more, more preferably 95% or more, still more preferably 98% or more.

In the exterior member 101, Machine Direction (MD) and Transverse Direction (TD) in the process for manufacturing thereof can be discriminated from each other for the barrier layer 101C described later. When the barrier layer 101C includes an aluminum alloy foil or a stainless steel foil, linear streaks called rolling indentations are formed on the surface of the metal foil in the rolling direction (RD) of the metal foil. Since the rolling indentations extend along the rolling direction, the rolling direction of the metal foil can be known by observing the surface of the metal foil. In the process for manufacturing of the laminate, the MD of the laminate and the RD of the metal foil normally coincides with each other, and therefore by observing the surface of the metal foil of the laminate to identify the rolling direction (RD) of the metal foil, the MD of the laminate can be identified. Since the TD of the laminate is perpendicular to the MD of the laminate, the TD of the laminate can be identified.

If the MD of the exterior member 101 cannot be identified by the rolling indentations of the aluminum alloy foil, the MD can be identified by the following method. Examples of the method for identifying the MD of the exterior member 101 include a method in which a cross-section of the heat-sealable resin layer of the exterior member 101 is observed with an electron microscope to examine a sea-island structure. In the method, the direction parallel to a cross-section in which the average of the diameters of the island shapes in a direction perpendicular to the thickness direction of the heat-sealable resin layer is maximum can be determined as MD. Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, in each cross-section, the shape of each island is observed. For the shape of each island, the linear distance between the leftmost end in a direction perpendicular to the thickness direction of the heat-sealable resin layer and the rightmost end in the perpendicular direction is taken as a diameter y. In each cross-section, the average of the top 20 diameters y in descending order of the diameter y of the island shape is calculated. The direction parallel to a cross-section having the largest average of the diameters y of the island shapes is determined as MD.

### <1-1-1. Base material layer>

The base material layer 101A is a layer provided for the purpose of, for example, exhibiting a function as a base material of the exterior member 101. The base material layer 101A is located on the outer layer side of the exterior member 101.

The material for forming the base material layer 101A is not particularly limited as long as it has a function as a base material, i.e., at least insulation quality. The base material layer 101A can be formed using, for example, resin, and the resin may contain additives described later.

When the base material layer 101A is formed of a resin, the base material layer 101A may be, for example, resin film formed of a resin, or may be formed by applying a resin. The resin film may be an unstretched film or a stretched film. Examples of the stretched film include uniaxially stretched films and biaxially stretched films, and biaxially stretched films are preferable. Examples of the stretching method for forming a biaxially stretched film include a sequential biaxial stretching method, an inflation method, and a simultaneous biaxial stretching method. Examples of the method for applying a resin include a roll coating method, a gravure coating method and an extrusion coating method.

Examples of the resin that forms the base material layer 101A include resins such as polyester, polyamide, polyolefin, epoxy resin, acrylic resin, fluororesin, polyurethane, silicone resin and phenol resin, and modified products of these resins. The resin that forms the base material layer 101A may be a copolymer of these resins or a modified product of the copolymer. Further, a mixture of these resins may be used.

Of these resins, polyester and polyamide are preferable as resins that form the base material layer 101A.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate) and polyethylene(terephthalate/decane dicarboxylate). These polyesters may be used alone, or may be used in combination of two or more thereof.

Specific examples of the polyamide include polyamides such as aliphatic polyamides such as nylon 6, nylon 66, nylon 610, nylon 12, nylon 46, and copolymers of nylon 6 and nylon 66; hexamethylenediamine-isophthalic acid-terephthalic acid copolymerization polyamides containing a structural unit derived from terephthalic acid and/or isophthalic acid, such as nylon 6I, nylon 6T, nylon 6IT and nylon 6I6T (I denotes isophthalic acid and T denotes terephthalic acid), and polyamides containing aromatics, such as polyamide MXD6 (polymethaxylylene adipamide); alicyclic polyamides such as polyamide PACM6 (polybis(4-aminocyclohexyl)methaneadipamide; polyamides copolymerized with a lactam component or an isocyanate component such as 4,4'-diphenylmethane-diisocyanate, and polyester amide copolymers and polyether ester amide copolymers as copolymers of a copolymerization polyamide and a polyester or a polyalkylene ether glycol; and copolymers thereof. These polyamides may be used alone, or may be used in combination of two or more thereof.

The base material layer 101A contains preferably at least one of a polyester film, a polyamide film and a polyolefin film, preferably at least one of a stretched polyester film, a stretched polyamide film and a stretched polyolefin film, still more preferably at least one of a stretched polyethylene terephthalate film, a stretched polybutylene terephthalate film, a stretched nylon film and a stretched polypropylene film, even more preferably at least one of a biaxially stretched polyethylene terephthalate film, a biaxially stretched polybutylene terephthalate film, a biaxially stretched nylon film, and a biaxially stretched polypropylene film.

The base material layer 101A may be a single layer, or may include two or more layers. When the base material layer 101A includes two or more layers, the base material layer 101A may be a laminate obtained by laminating resin films with an adhesive or the like, or a resin film laminate obtained by co-extruding resins to form two or more layers. The resin film laminate obtained by co-extruding resins to form two or more layers may be used as the base material layer 101A in an unstretched state, or may be uniaxially stretched or biaxially stretched and used as the base material layer 101A.

Specific examples of the resin film laminate with two or more layers in the base material layer 101A include laminates of a polyester film and a nylon film, nylon film laminates with two or more layers, and polyester film laminates with two or more layers. Laminates of a stretched nylon film and a stretched polyester film, stretched nylon film laminates with two or more layers, and stretched polyester film laminates with two or more layers are preferable. For example, when the base material layer 101A is a resin film laminate with two layers, the base material layer 1 is preferably a laminate of a polyester resin film and a polyester resin film, a laminate of a polyamide resin film and a polyamide resin film, or a laminate of a polyester resin film and a polyamide resin film, more preferably a laminate of a polyethylene terephthalate film and a polyethylene terephthalate film, a laminate of a nylon film and a nylon film, or a laminate of a polyethylene terephthalate film and a nylon film. Since the polyester resin is hardly discolored even in the case where for example, an electrolytic solution is deposited on the surface, it is preferable that the polyester resin film is located at the outermost layer of the base material layer 101A when the base material layer 101A is a resin film laminate with two or more layers.

When the base material layer 101A is a resin film laminate with two or more layers, the two or more resin films may be laminated with an adhesive interposed therebetween. Specific examples of the preferred adhesive include the same adhesives as those exemplified for the adhesive agent layer 101B described later. The method for laminating a resin film having two or more layers is not particularly limited, and a known method can be employed. Examples thereof include a dry lamination method, a sand lamination method, an extrusion lamination method and a thermal lamination method, and a dry lamination method is preferable. When the resin film is laminated by a dry lamination method, it is preferable to use a polyurethane adhesive as the adhesive. Here, the thickness of the adhesive is, for example, about 2 to 5 µm. In addition, the lamination may be performed with an anchor coat layer formed on the resin film. Examples of the anchor coat layer include the same adhesives as those exemplified for the adhesive agent layer 101B described later. Here, the thickness of the anchor coat layer is, for example, about 0.01 to 1.0 µm.

Additives such as a slipping agent, a flame retardant, an antiblocking agent, an antioxidant, a light stabilizer, a tackifier and an antistatic agent may be present on at least one of the surface of the base material layer 101A and/or inside the base material layer 101A. The additives may be used alone, or may be used in combination of two or more thereof.

From the viewpoint of improving the followability of the exterior member at corners and the like of the exterior member 101, it is preferable that a slipping agent is present on the surface of the base material layer 101A. The slipping agent is not particularly limited, and is preferably an amide-based slipping agent. Specific examples of the amide-based slipping agent include saturated fatty acid amides, unsaturated fatty acid amides, substituted amides, methylol amides, saturated fatty acid bisamides, unsaturated fatty acid bisamides, fatty acid ester amides, and aromatic bisamides. Specific examples of the saturated fatty acid amide include lauric acid amide, palmitic acid amide, stearic acid amide, behenic acid amide, and hydroxystearic acid amide. Specific examples of unsaturated fatty acid amide include oleic acid amide and erucic acid amide. Specific examples of the substituted amide include N-oleylpalmitic acid amide, N-stearyl stearic acid amide, N-stearyl oleic acid amide, N-oleyl stearic acid amide, and N-stearyl erucic acid amide. Specific examples of the methylolamide include methylolstearic acid amide. Specific examples of the saturated fatty acid bisamide include methylenebisstearic acid amide, ethylenebiscapric acid amide, ethylenebislauric acid amide, ethylenebisstearic acid amide, ethylenebishydroxystearic acid amide, ethylenebisbehenic acid amide, hexamethylenebisstearic acid amide, hexamethylenehydroxystearic acid amide, N,N'-distearyl adipic acid amide, and N,N'-distearyl sebacic acid amide. Specific examples of the unsaturated fatty acid bisamide include ethylenebisoleic acid amide, ethylenebiserucic acid amide, hexamethylenebisoleic acid amide, N,N'-dioleyladipic acid amide, and N,N'-dioleylsebacic acid amide. Specific examples of the fatty acid ester amide include stearoamideethyl stearate. Specific examples of the aromatic bisamide include m-xylylenebisstearic acid amide, m-xylylenebishydroxystearic acid amide, and N,N'-distearylisophthalic acid amide. The slipping agents may be used alone, or may be used in combination of two or more thereof.

When the slipping agent is present on the surface of the base material layer 101A, the amount of the slipping agent present is not particularly limited, and is preferably about 3 mg/m² or more, more preferably about 4 to 15 mg/m², still more preferably about 5 to 14 mg/m².

The slipping agent present on the surface of the base material layer 101A may be one obtained by exuding the slipping agent contained in the resin forming the base material layer 101A, or one obtained by applying the slipping agent to the surface of the base material layer 101A.

The thickness of the base material layer 101A is not particularly limited as long as a function as a base material is performed, and the thickness of the base material layer 1 is, for example, about 3 to 50 µm, preferably about 10 to 35 µm. When the base material layer 101A is a resin film laminate with two or more layers, the thickness of the resin film forming each layer is preferably about 2 to 25 µm.

### <1-1-2. Adhesive agent layer>

In the exterior member 101, the adhesive agent layer 101B is a layer provided between the base material layer 101A and the barrier layer 101C if necessary for the purpose of enhancing bondability between these layers.

The adhesive agent layer 101B is formed of an adhesive capable of bonding the base material layer 101A and the barrier layer 101C. The adhesive used for forming the adhesive agent layer 101B is not limited, and may be any of a chemical reaction type, a solvent volatilization type, a heat melting type, a heat pressing type, and the like. The adhesive agent may be a two-liquid curable adhesive (two-liquid adhesive), a one-liquid curable adhesive (one-liquid adhesive), or a resin that does not involve curing reaction. The adhesive agent layer 101B may be a single layer or a multi-layer.

Specific examples of the adhesive component contained in the adhesive include polyester such as polyethylene terephthalate, polybutylene terephthalate, polyethylene naphthalate, polybutylene naphthalate, polyethylene isophthalate and copolyester; polyether; polyurethane; epoxy resins; phenol resins; polyamides such as nylon 6, nylon 66, nylon 12 and copolymerized polyamide; polyolefin-based resins such as polyolefins, cyclic polyolefins, acid-modified polyolefins and acid-modified cyclic polyolefins; cellulose; (meth)acrylic resins; polyimide; polycarbonate; amino resins such as urea resins and melamine resins; rubbers such as chloroprene rubber, nitrile rubber and styrene-butadiene rubber; and silicone resins. These adhesive components may be used alone, or may be used in combination of two or more thereof. Of these adhesive components, polyurethane-based adhesives are preferable. In addition, the adhesive strength of these resins used as adhesive components can be increased by using an appropriate curing agent in combination. As the curing agent, appropriate one is selected from polyisocyanate, a polyfunctional epoxy resin, an oxazoline group-containing polymer, a polyamine resin, an acid anhydride and the like according to the functional group of the adhesive component.

Examples of the polyurethane adhesive include polyurethane adhesives containing a main component containing a polyol compound and a curing agent containing an isocyanate compound. The polyurethane adhesive is preferably a two-liquid curable polyurethane adhesive having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Since the adhesive agent layer 101B is formed of a polyurethane adhesive, excellent electrolytic solution resistance is imparted to the exterior member 101, so that peeling of the base material layer 101A is suppressed even if the electrolytic solution is deposited on the side surface.

Other components may be added to the adhesive agent layer 101B as long as bondability is not inhibited, and the adhesive agent layer 101B may contain a colorant, a thermoplastic elastomer, a tackifier, a filler, and the like. When the adhesive agent layer 101B contains a colorant, the exterior member 101 can be colored. As the colorant, known colorants such as pigments and dyes can be used. The colorants may be used alone, or may be used in combination of two or more thereof.

The type of pigment is not particularly limited as long as the bondability of the adhesive agent layer 101B is not impaired. Examples of the organic pigment include azo-based pigments, phthalocyanine-based pigments, quinacridone-based pigments, anthraquinone-based pigments, dioxazine-based pigments, indigothioindigo-based pigments, perinone-perylene-based pigments, isoindolenine-based pigments and benzimidazolone-based pigments. Examples of the inorganic pigment include carbon black-based pigments, titanium oxide-based pigments, cadmium-based pigments, lead-based pigments, chromium-based pigments and iron-based pigments, and also fine powder of mica (mica) and fish scale foil.

Of the colorants, carbon black is preferable for the purpose of, for example, blackening the appearance of the exterior member 101.

The average particle diameter of the pigment is not particularly limited, and is, for example, about 0.05 to 5 µm, preferably about 0.08 to 2 µm. The average particle size of the pigment is a median diameter measured by a laser diffraction/scattering particle size distribution measuring apparatus.

The content of the pigment in the adhesive agent layer 101B is not particularly limited as long as the exterior member 101 is colored, and the content is, for example, about 5 to 60 mass%, preferably 10 to 40 mass%.

The thickness of the adhesive agent layer 101B is not particularly limited as long as the base material layer 101A and the barrier layer 101C can be bonded to each other, and for example, the thickness is about 1 µm or more, or about 2 µm or more for the lower limit, and about 10 µm or less, or about 5 µm or less for the upper limit, and is preferably in the range of about 1 to 10 µm, about 1 to 5 µm, about 2 to 10 µm, or about 2 to 5 µm.

### <1-1-3. Colored layer>

The colored layer is a layer provided between the base material layer 101A and the barrier layer 101C if necessary (not shown). When the adhesive agent layer 101B is present, the colored layer may be provided between the base material layer 101A and the adhesive agent layer 101B or between the adhesive agent layer 101B and the barrier layer 101C. The colored layer may be provided on the outer side of the base material layer 101A. By providing the colored layer, the exterior member 101 can be colored.

The colored layer can be formed by, for example, applying an ink containing a colorant to the surface of the base material layer 101A, the surface of the adhesive agent layer 101B, or the surface of the barrier layer 101C. As the colorant, known colorants such as pigments and dyes can be used. The colorants may be used alone, or may be used in combination of two or more thereof.

Specific examples of the colorant contained in the colored layer include the same colorants as those exemplified for the adhesive agent layer 101B.

### <1-1-4 Barrier layer>

In the exterior member 101, the barrier layer 101C is a layer which suppresses at least ingress of moisture.

The barrier layer 101C of the exterior member 101 includes an aluminum alloy foil. The characteristics of the aluminum alloy foil will be described below.

### • Fe content: 0.2 mass% or more and 2.0 mass% or less

Fe is crystallized as an Al-Fe-based intermetallic compound during casting, and when the compound has a large size, Fe forms a site of recrystallization during annealing, so that there is an effect of refinement of recrystallized grains. If the content of Fe is less than the lower limit, the distribution density of large intermetallic compounds decreases, so that the effect of crystal grain refinement is low, and the final crystal grain size distribution becomes uneven. If the content of Fe is more than the upper limit, the effect of crystal grain refinement reaches a plateau or rather decreases, and further, the Al-Fe-based intermetallic compound produced during casting has a very large size, so that the elongation and the rolling property are deteriorated. Thus, the content of Fe is set to be in the above-described range. For the same reason, the lower limit of the content of Fe is preferably 0.5 mass%, and for the same reason, it is more preferable that the lower limit of the content of Fe is 1.0 mass% and the upper limit of the content of Fe is 1.8 mass%.

### • Mg content: 0.1 mass% or more and 5.0 mass% or less

Mg forms a solid solution with aluminum, and the strength of the soft alloy foil can be increased by solid solution intensification. In addition, Mg is likely to form a solid solution with aluminum, so that even when Mg is contained together with Fe, there is little risk that the intermetallic compound increases in size, leading to deterioration of the followability of the exterior member at corners and the like and the rolling property. If the content of Mg is less than the lower limit, improvement of strength is insufficient, and if the content of Mg is more than the upper limit, the aluminum alloy foil hardens, leading to deterioration of the rolling property and moldability. The content of Mg is particularly preferably in the range of 0.5 mass% or more and 5.0 mass% or less.

It was also confirmed that the corrosion resistance of a lithium ion secondary battery to an electrolytic solution was improved by adding Mg. While details of the mechanism are not evident, an increase in added amount of Mg makes it harder for the aluminum alloy foil to react with lithium in the electrolytic solution, so that it is possible to suppress micronization of the aluminum alloy foil and generation of through-holes. When particularly evident improvement of corrosion resistance is expected, it is desirable that the lower limit of the content of Mg be 0.5 mass% although the followability of the exterior member at corners and the like is slightly deteriorated.

### • Si content: preferably 0.5 mass% or less

A very small amount of Si may be added for the purpose of improving the strength of the foil. In the present embodiment, the composition of the aluminum alloy foil is set to have a Si content of 0.5 mass% or less. Thus, the size of an Al-Fe-Si-based intermetallic compound generated during casting decreases, so that the extension of the foil and the followability of the exterior member at corners and the like are improved. Even if the thickness of the foil is small, breakage originating from an intermetallic compound is unlikely to occur, and the rolling property is improved. When a large amount of Si is not added, the amount of Mg-Si-based precipitates generated decreases, and thus deterioration of the rolling property and a decrease in the amount of Mg as a solid solution are unlikely to occur, so that the strength is hardly reduced. For the same reason, it is desirable that the content of Si be 0.2 mass% or less. The followability of the exterior member at corners and the like, the rolling property, and the degree of fineness of crystal grains tend to be improved as the content of Si decrease.

### • Inevitable impurity

In addition, the aluminum alloy foil can contain an inevitable impurity such as Cu and Mn. It is desirable that the amount of each element in the inevitable pure substances be 0.1 mass% or less. In the present embodiment, the upper limit of the content of the inevitable impurity is not limited to the above-described numerical value.

However, Mn hardly forms a solid solution with aluminum, and therefore is different from Mg in that it cannot be expected that the strength of the soft foil is significantly increased by solid solution intensification. If a large amount of Mn is added to an alloy having a large Fe content, there may be an elevated risk of increasing the size of the intermetallic compound and generating a large Al-Fe-Mn-based intermetallic compound, leading to deterioration of the rolling property and the followability of the exterior member at corners and the like. Thus, it is desirable that the Mn content be 0.1 mass% or less.

### • Texture orientation density: 15 or less in each of Copper orientation and R orientation

The texture has a significant influence on the mechanical properties of the foil and the followability of the exterior member at corners and the like. If the density in Copper orientation or R orientation is more than 15, it may be impossible to perform uniform deformation during molding, resulting in deterioration of the followability of the exterior member at corners and the like. For obtaining followability of the exterior member at corners portion and the like, it is desirable to maintain a density of 15 or less in each of Copper orientation and R orientation. More preferably, the density in each of the orientations is 10 or less.

### • Mg concentration of surface: 5.0 atom% or more and oxide film thickness: 80 Å or more (Mg content: 0.1 mass% or more and 1.5 mass% or less)

While details of the mechanism are not evident, the Mg concentration of the foil surface and the oxide film thickness have been confirmed to influence corrosion resistance to an electrolytic solution of a lithium secondary battery. When the Mg concentration of the foil surface is high, and a thick oxide film, corrosion resistance is improved. Thus, when the Mg content is 0.1 mass% or more and 1.5 mass% or less, it is desirable that the Mg concentration of the aluminum foil surface be 5.0 atom% or more and the oxide film thickness be 80 Å or more. More preferably, the Mg concentration of the surface is 15.0 atom% or more, and the oxide film thickness is 200 Å or more. It is more desirable that the Mg concentration of the surface be 20.0 atom% or more. Here, the Mg concentration of the surface is a Mg concentration of a surface portion extending from the outermost surface to a depth of 8 nm, and the Mg concentration is an amount relative to the total amount of all elements which is defined as 100 atom%.

### • Mg concentration of surface: 15.0 atom% or more and oxide film thickness: 120 Å or more (Mg content: more than 1.5 mass% and 5.0 mass% or less)

As described above, while details of the mechanism are not evident, the Mg concentration of the foil surface and the oxide film thickness have been confirmed to influence corrosion resistance to an electrolytic solution of a lithium secondary battery. When the Mg concentration of the foil surface is high, and a thick oxide film, corrosion resistance is improved. Thus, when the Mg content is more than 1.5 mass% or more and 5.0 mass% or less, it is desirable that the Mg concentration of the aluminum foil surface be 15.0 atom% or more and the oxide film thickness be 120 Å or more. More preferably, the Mg concentration of the surface is 20.0 atom% or more, and the oxide film thickness is 220 Å or more. It is more desirable that the Mg concentration of the surface be 25.0 atom% or more.

### • L1/L2 > 3.0, where L1 is a length of a high-angle grain boundary and L2 is a low-angle grain boundary per unit area as measured by an electron backscatter diffraction method

The ratio between the high-angle grain boundary (HAGB) and the low-angle grain boundary (LAGB) in the recrystallized grain structure after annealing has influences on the elongation of the foil and the followability of the exterior member at corners and the like. If the ratio of LAGB is high in the recrystallized grain structure after final annealing, localization of deformation is likely to occur, so that the elongation and the followability of the elongation, and the followability of the exterior member at corners are deteriorated. Thus, when the ratio of HAGB is increased to satisfy L1/L2 > 3.0, high elongation and good followability of the exterior member at corners and the like can be expected. More preferably, L1/L2 > 5.0.

### • Tensile strength: 110 MPa or more and 180 MPa or less (Mg content: 0.1 mass% or more and 1.5 mass% or less)

When the Mg content is 0.1 mass% or more and 1.5 mass% or less, a tensile strength of 110 MPa or more is required for dramatically improving the shock resistance and piercing strength in the existing foils of JIS A 8079, 8021 and the like. In particular, for improving the followability of the exterior member at corners and the like, the tensile strength is preferably 180 MPa or less. The tensile strength can be achieved by selecting the composition and optimizing the crystal grain size.

### • Tensile strength: 180 MPa or more (Mg content: more than 1.5 mass% and 5.0 mass% or less)

When the Mg content is more than 1.5 mass% and 5.0 mass% or less, a tensile strength of 180 MPa or more is preferable for dramatically improving the shock resistance and piercing strength in the existing foils of JIS A 8079, 8021 and the like. For the same reason, it is desirable that the tensile strength be 200 MPa or more. However, since the followability of the exterior member at corners and the like is deteriorated as the tensile strength increases, it is preferable to reduce the tensile strength when the followability is considered to be important. As described above, the tensile strength can be achieved by selecting the composition and optimizing the crystal grain size.

### • Breaking elongation: 10% or more (Mg content: 0.1 mass% or more and 1.5 mass% or less)

The influence of elongation on the followability of the exterior member at corners and the like significantly varies depending on the molding method, and the followability of the exterior member at corners and the like is not determined only by the elongation. In bulging often used for aluminum packaging materials, higher elongation of the aluminum alloy foil is more advantageous for the followability of the exterior member at corners and the like, and when the Mg content is 0.1 mass% or more and 1.5 mass% or less, it is desirable to have an elongation of 10% or more. The elongation property can be achieved by selecting the composition and reducing the crystal grain size.

### • Elongation: 15% or more (Mg content: more than 1.5 mass% and 5.0 mass% or less)

As described above, the influence of elongation on the followability of the exterior member at corners and the like significantly varies depending on the molding method, and the followability of the exterior member at corners and the like is not determined only by the elongation, but in bulging often used for aluminum packaging materials, higher elongation of the aluminum alloy foil is more advantageous for the followability, and when the Mg content is more than 1.5 mass% and 5.0 mass% or less, it is desirable to have an elongation of 15% or more. As described above, the elongation property can be achieved by selecting the composition and reducing the crystal grain size.

### • Average crystal grain size: 25 µm or less

When the crystal grains of the soft aluminum alloy foil decrease in size, it is possible to suppress roughness of a foil surface in deformation, and associated high elongation and high followability of the exterior member at corners and the like can be expected. The influence of the crystal grain size increases as the thickness of the foil decreases. It is desirable that the average crystal grain size be 25 µm or less for achieving a high elongation property and associated high formability of the exterior member at corners and the like. The average crystal grain size can be attained by selection of the composition and manufacturing conditions involving homogenization treatment and optimization of the cold rolling ratio.

Hereinafter, a method for preparing an aluminum alloy foil will be described.

An aluminum alloy ingot is produced by a conventional method such as a semi-continuous casting method. The aluminum alloy ingot has the composition of a Fe content of 0.2 mass% or more and 2.0 mass% or less and a Mg content of 0.1 mass% or more and 5.0 mass% or less, a balance containing Al and an inevitable impurity, and a Mn content of 0.1 mass% or less as desired. The obtained laminate is subjected to homogenization treatment at 480 to 550°C for 6 to 12 hours.

### • Homogenization treatment: 450 to 550°C

The homogenization treatment is intended to eliminate microsegregation in the ingot and adjust the state of distribution of intermetallic compounds, and is very important for ultimately obtaining a desired crystal grain structure.

Generally, the homogenization treatment of an aluminum material is performed at 400 to 600°C for a long time, but in the present invention, it is necessary to give consideration to refinement of crystal grains by addition of Fe.

In the homogenization treatment, precipitation of Fe may be insufficient at a temperature lower than 450°C, leading to an increase in size of crystal grains during final annealing. The ratio of in-situ recrystallization, and hence the ratio of LAGB may increase, leading to a decrease in L1/L2. The followability of the exterior member at corners and the like may be deteriorated due to an increase in orientation density in each of Copper orientation and R orientation. At a temperature higher than 550°C, a crystallized product significantly grows, leading to an increase in size of crystal grains during final annealing and deterioration of the followability of the exterior member at corners and the like. It is necessary to secure at least 3 hours as a time for the homogenization treatment. If the homogenization treatment time is less than 3 hours, precipitation is not sufficient, and thus the density of fine intermetallic compounds decreases. Preferably, the temperature is 480 to 520°C and the time is 5 hours or more.

After the homogenization treatment, hot rolling is performed to obtain an aluminum alloy sheet having a desired thickness. The hot rolling can be performed by a conventional method, and it is desirable that the winding temperature in the hot rolling be a temperature equal to or higher than the recrystallization temperature, specifically 300°C or higher. If the winding temperature is lower than 300°C, a fine Al-Fe-based intermetallic compound of 0.3 µm or less is precipitated. Such a temperature is not desirable because recrystallized grains and fiber grains are mixed after hot rolling, so that the crystal grain size after intermediate annealing or final annealing may be nonuniform, leading to deterioration of the elongation property.

After the hot rolling, cold rolling, intermediate annealing and final cold rolling are performed to set the thickness to 5 to 100 µm, thereby obtaining the aluminum alloy foil according to the present invention.

There are two types of intermediate annealing. One is batch annealing in which a coil is put into a furnace and held for a certain period of time, and the other is rapid heating and rapid cooling of a material by a continuous annealing line (hereinafter referred to as CAL annealing). When intermediate annealing is applied, either of the methods may be used. CAL annealing is desirable when crystal grain refinement is performed to increase the strength. However, there is a possibility that the texture is developed after final annealing subsequent to final cold rolling after CAL annealing, the density in each of Copper orientation and R orientation increases, resulting in deterioration of the followability of the exterior member at corners and the like. For this reason, batch annealing is preferable if priority is given to the followability of the exterior member at corners portion and the like.

For example, conditions of 300 to 400°C for 3 hours or more can be adopted for batch annealing. Conditions of a temperature rise rate of 10 to 250°C/sec, a heating temperature of 400°C to 550°C, no holding time or a holding time of 5 seconds or less, and a cooling rate of 20 to 200 °C/sec can be adopted for CAL annealing. However, in the present invention, the presence or absence of intermediate annealing, the conditions for intermediate annealing when it is performed, and the like are not limited to specific ones.

### • Final cold rolling ratio: 84.0% or more and 97.0% or less

The amount of strain accumulated in the material increases to reduce the size of recrystallized grains after final annealing as the final cold rolling ratio up to a final thickness after intermediate annealing increases. In addition, an effect of suppressing in-situ recrystallization is exhibited, and it is expected to improve the followability of the exterior member at corners and the like due an increase in L1/L2. Specifically, it is desirable that the final cold rolling ratio be 84.0% or more. However, if the final cold rolling ratio is excessively high, the followability of the exterior member at corners and the like may be deteriorated due to an increase in orientation density in each of Copper orientation and R orientation even after final annealing. As a result, a decrease in L1/L2 occurs, and therefore, specifically, it is desirable the final cold rolling ratio be 97.0% or less. If the final cold rolling ratio is low, the followability of the exterior member at corner portions and the like may be deteriorated due to an increase in size of crystal grains or a decrease in L1/L2. For the same reason, it is further desirable that the final cold rolling ratio be in the range of 90.0% or more and 93.0% or less.

After foil rolling, final annealing is performed to obtain a soft foil. The final annealing after foil rolling may be generally performed at 250°C to 400°C. However, when the effect of corrosion resistance by Mg is enhanced, it is desirable to perform holding at a high temperature of 300°C or higher for 5 hours or more, it is further desirable that the temperature be 350°C to 400°C.

If the final annealing temperature is low, softening may be insufficient, leading to a decrease in L1/L2 or an increase in orientation density in each of Copper orientation and R orientation. In addition, the concentration of Mg on the foil surface and growth of an oxide film may be insufficient, leading to deterioration of corrosion resistance. If the temperature exceeds 400°C, there is a possibility that Mg is excessively concentrated on the foil surface, so that the foil is discolored, or the properties of the oxide film change, and thus minute cracks are generated, leading to deterioration of corrosion resistance. A final annealing time of less than 5 hours leads to an insufficient effect of final annealing.

The resulting aluminum alloy foil has, for example, a tensile strength of 110 MPa or more and 180 MPa or less and an elongation of 10% or more at room temperature when the Mg content is 0.1 mass% or more and 1.5 mass% or less. For example, the tensile strength is 180 MPa or more and the elongation is 15% or more when the Mg content is more than 1.5 mass% or more and 5.0 mass% or less. The average crystal grain size is 25 µm or less. The average crystal grain size can be determined by a cutting method specified in JIS G0551.

The thickness of the aluminum alloy foil may exhibit at least a function as a barrier layer for suppressing ingress of moisture in the exterior member 101. The lower limit and the upper limit of the thickness of the aluminum alloy foil are about 9 µm or more and about 200 µm or less, respectively. For example, from the viewpoint of reducing the thickness of the exterior member 101, the thickness of the aluminum alloy foil is preferably about 85 µm or less, more preferably about 50 µm or less, still more preferably about 45 µm or less, especially preferably about 40 µm or less for the upper limit, and preferably about 10 µm or more, more preferably about 20 µm or more, still more preferably about 25 µm or more for the lower limit, and is preferably in the range of about 10 to 85 µm, about 10 to 50 µm, about 10 to 45 µm, about 10 to 40 µm, about 20 to 85 µm, about 20 to 50 µm, about 20 to 45 µm, about 20 to 40 µm, about 25 to 85 µm, about 25 to 50 µm, about 25 to 45 µm, or about 25 to 40 µm.

In addition, for suppression of dissolution and corrosion of the aluminum alloy foil, and the like, it is preferable that a corrosion resistance film is provided on at least one surface of the aluminum alloy foil. The aluminum alloy foil may include a corrosion-resistant film on each of both surfaces. Here, the corrosion-resistant film refers to a thin film obtained by subjecting the surface of the aluminum alloy foil to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance to the aluminum alloy foil. One of treatments for forming the corrosion-resistant film may be performed, or two or more thereof may be performed in combination. In addition, not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. The definition of the chemical conversion treatment may include these treatments. When the aluminum alloy foil is provided with the corrosion-resistant film, the aluminum alloy foil is regarded as including the corrosion-resistant film.

The corrosion-resistant film exhibits the effects of preventing delamination between the aluminum alloy foil and the base material layer during molding of the exterior member 101; preventing dissolution and corrosion of the surface of the aluminum alloy foil, dissolution and corrosion of aluminum oxide present on the surface of the aluminum alloy foil, by hydrogen fluoride generated by reaction of an electrolyte with moisture; improving the bondability (wettability) of the surface of the aluminum alloy foil; preventing delamination between the base material layer and the aluminum alloy foil during heat-sealing; and preventing delamination between the base material layer and the aluminum alloy foil during molding.

Various corrosion-resistant films formed by chemical conversion treatment are known, and examples thereof include mainly corrosion-resistant films containing at least one of a phosphate, a chromate, a fluoride, a triazine thiol compound, and a rare earth oxide. Examples of the chemical conversion treatment using a phosphate or a chromate include chromic acid chromate treatment, phosphoric acid chromate treatment, phosphoric acid-chromate treatment and chromate treatment, and examples of the chromium compound used in these treatments include chromium nitrate, chromium fluoride, chromium sulfate, chromium acetate, chromium oxalate, chromium biphosphate, acetylacetate chromate, chromium chloride and chromium potassium sulfate. Examples of the phosphorus compound used in these treatments include sodium phosphate, potassium phosphate, ammonium phosphate and polyphosphoric acid. Examples of the chromate treatment include etching chromate treatment, electrolytic chromate treatment and coating-type chromate treatment, and coating-type chromate treatment is preferable. This coating-type chromate treatment is treatment in which at least a surface of the barrier layer (e.g. an aluminum alloy foil) on the inner layer side is first degreased by a well-known treatment method such as an alkali immersion method, an electrolytic cleaning method, an acid cleaning method, an electrolytic acid cleaning method or an acid activation method, and a treatment solution containing a metal phosphate such as Cr (chromium) phosphate, Ti (titanium) phosphate, Zr (zirconium) phosphate or Zn (zinc) phosphate or a mixture of these metal salts as a main component, a treatment solution containing any of non-metal salts of phosphoric acid and a mixture of these non-metal salts as a main component, or a treatment solution formed of a mixture of any of these salts and a synthetic resin or the like is then applied to the degreased surface by a well-known coating method such as a roll coating method, a gravure printing method or an immersion method, and dried. As the treatment liquid, for example, various solvents such as water, an alcohol-based solvent, a hydrocarbon-based solvent, a ketone-based solvent, an ester-based solvent, and an ether-based solvent can be used, and water is preferable. Examples of the resin component used here include polymers such as phenol-based resins and acryl-based resins, and examples of the treatment include chromate treatment using an aminated phenol polymer having any of repeating units represented by the following general formulae (1) to (4). In the aminated phenol polymer, the repeating units represented by the following general formulae (1) to (4) may be contained alone, or may be contained in combination of two or more thereof. The acryl-based resin is preferably polyacrylic acid, an acrylic acid-methacrylic acid ester copolymer, an acrylic acid-maleic acid copolymer, an acrylic acid-styrene copolymer, or a derivative thereof such as a sodium salt, an ammonium salt or an amine salt thereof. In particular, a derivative of polyacrylic acid such as an ammonium salt, a sodium salt or an amine salt of polyacrylic acid is preferable. In the present embodiment, the polyacrylic acid means a polymer of acrylic acid. The acryl-based resin is also preferably a copolymer of acrylic acid and dicarboxylic acid or dicarboxylic anhydride, and is also preferably an ammonium salt, a sodium salt or an amine salt of a copolymer of acrylic acid and dicarboxylic acid or dicarboxylic anhydride. The acryl-based resins may be used alone, or may be used in combination of two or more thereof.

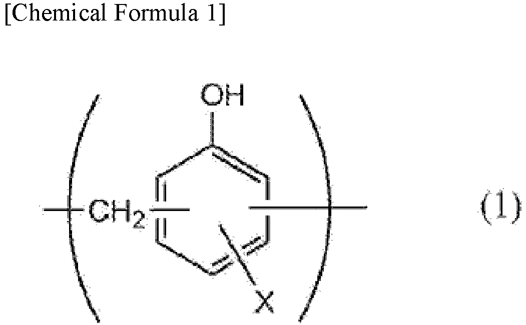

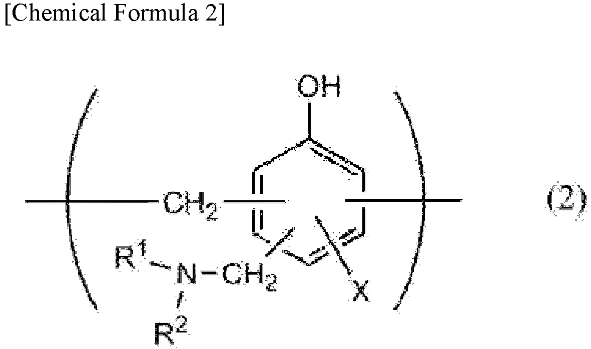

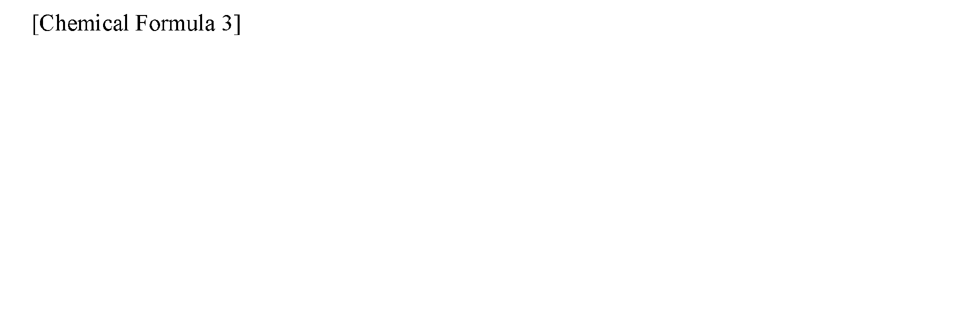

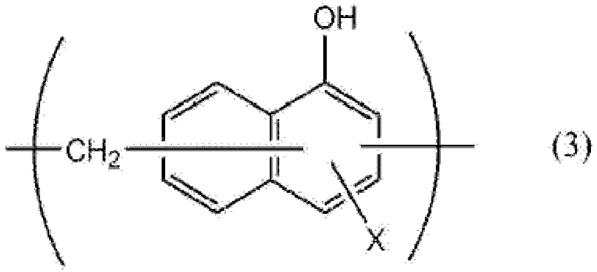

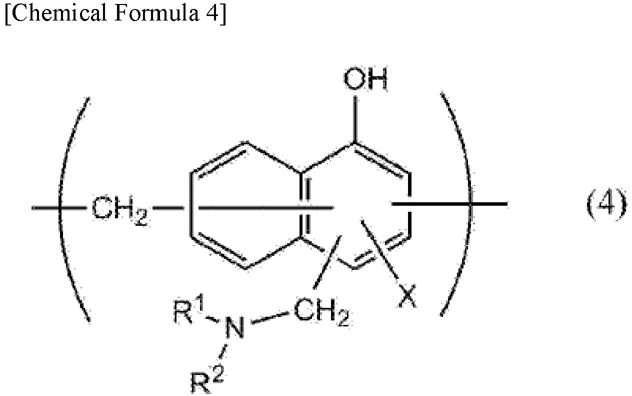

In the general formulae (1) to (4), X represents a hydrogen atom, a hydroxy group, an alkyl group, a hydroxyalkyl group, an allyl group, or a benzyl group. R¹ and R² are the same or different, and each represents a hydroxy group, an alkyl group, or a hydroxyalkyl group. In the general formulae (1) to (4), examples of the alkyl group represented by X, R¹ and R² include linear or branched alkyl groups with a carbon number of 1 to 4, such as a methyl group, an ethyl group, an n-propyl group, an isopropyl group, an n-butyl group, an isobutyl group, and a tert-butyl group. Examples of the hydroxyalkyl group represented by X, R¹ and R² include linear or branched alkyl groups with a carbon number of 1 to 4, which is substituted with one hydroxy group, such as a hydroxymethyl group, a 1-hydroxyethyl group, a 2-hydroxyethyl group, a 1-hydroxypropyl group, a 2-hydroxypropyl group, a 3-hydroxypropyl group, a 1-hydroxybutyl group, a 2-hydroxybutyl group, a 3-hydroxybutyl group, and a 4-hydroxybutyl group. In the general formulae (1) to (4), the alkyl group and the hydroxyalkyl group represented by X, R¹ and R² may be the same or different. In the general formulae (1) to (4), X is preferably a hydrogen atom, a hydroxy group or a hydroxyalkyl group. A number average molecular weight of the aminated phenol polymer having repeating units represented by the general formulae (1) to (4) is preferably about 500 to 1,000,000, and more preferably about 1,000 to 20,000, for example. The aminated phenol polymer is produced by, for example, performing polycondensation of a phenol compound or a naphthol compound with formaldehyde to prepare a polymer including repeating units represented by the general formula (1) or the general formula (3), and then introducing a functional group (-CH₂NR¹R²) into the obtained polymer using formaldehyde and an amine (R¹R²NH). The aminated phenol polymers are used alone, or used in combination of two or more thereof.

Other examples of the corrosion-resistant film include thin films formed by corrosion prevention treatment of coating type in which a coating agent containing at least one selected from the group consisting of a rare earth element oxide sol, an anionic polymer and a cationic polymer is applied. The coating agent may further contain phosphoric acid or a phosphate, and a crosslinker for crosslinking the polymer. In the rare earth element oxide sol, fine particles of a rare earth element oxide (e.g. particles having an average particle diameter of 100 nm or less) are dispersed in a liquid dispersion medium. Examples of the rare earth element oxide include cerium oxide, yttrium oxide, neodymium oxide and lanthanum oxide, and cerium oxide is preferable from the viewpoint of further improving adhesion. The rare earth element oxides contained in the corrosion-resistant film can be used alone, or used in combination of two or more thereof. As the liquid dispersion medium for the rare earth element oxide, for example, various solvents such as water, an alcohol-based solvent, a hydrocarbon-based solvent, a ketone-based solvent, an ester-based solvent, and an ether-based solvent can be used, and water is preferable. For example, the cationic polymer is preferably polyethyleneimine, an ion polymer complex formed of a polymer having polyethyleneimine and a carboxylic acid, primary amine-grafted acrylic resins obtained by graft-polymerizing a primary amine with an acrylic main backbone, polyallylamine or a derivative thereof, or aminated phenol. The anionic polymer is preferably poly (meth)acrylic acid or a salt thereof, or a copolymer containing (meth)acrylic acid or a salt thereof as a main component. The crosslinker is preferably at least one selected from the group consisting of a silane coupling agent and a compound having any of functional groups including an isocyanate group, a glycidyl group, a carboxyl group and an oxazoline group. In addition, the phosphoric acid or phosphate is preferably condensed phosphoric acid or a condensed phosphate.

Examples of the corrosion-resistant film include films formed by applying a dispersion of fine particles of a metal oxide such as aluminum oxide, titanium oxide, cerium oxide or tin oxide or barium sulfate in phosphoric acid to the surface of the barrier layer and performing baking treatment at 150°C or higher.

The corrosion-resistant film may have a laminated structure in which at least one of a cationic polymer and an anionic polymer is further laminated if necessary. Examples of the cationic polymer and the anionic polymer include those described above.

The composition of the corrosion-resistant film can be analyzed by, for example, time-of-flight secondary ion mass spectrometry.

The amount of the corrosion-resistant film to be formed on the surface of the aluminum alloy foil in the chemical conversion treatment is not particularly limited, but for example when the coating-type chromate treatment is performed, and it is desirable that the chromic acid compound be contained in an amount of, for example, about 0.5 to 50 mg, preferably about 1.0 to 40 mg, in terms of chromium, the phosphorus compound be contained in an amount of, for example, about 0.5 to 50 mg, preferably about 1.0 to 40 mg, in terms of phosphorus, and the aminated phenol polymer be contained in an amount of, for example, about 1.0 to 200 mg, preferably about 5.0 to 150 mg, per 1 m² of the surface of the aluminum alloy foil.

The thickness of the corrosion-resistant film is not particularly limited, and is preferably about 1 nm to 20 µm, more preferably about 1 nm to 100 nm, still more preferably about 1 nm to 50 nm from the viewpoint of the cohesive force of the film and the adhesive strength with the barrier layer and the heat-sealable resin layer. The thickness of the corrosion-resistant film can be measured by observation with a transmission electron microscope or a combination of observation with a transmission electron microscope and energy dispersive X-ray spectroscopy or electron beam energy loss spectroscopy. By analyzing the composition of the corrosion-resistant film using time-of-flight secondary ion mass spectrometry, peaks derived from secondary ions from, for example, Ce, P and O (e.g. at least one of Ce₂PO₄⁺, CePO₄⁻ and the like) and secondary ions from, for example, Cr, P and O (e.g. at least one of CrPO₂⁺, CrPO₄⁻ and the like) are detected.

The chemical conversion treatment is performed in the following manner: a solution containing a compound to be used for formation of a corrosion-resistant film is applied to the surface of the aluminum alloy foil by a bar coating method, a roll coating method, a gravure coating method, an immersion method or the like, and heating is then performed so that the temperature of the aluminum alloy foil is about 70 to about 200°C. The aluminum alloy foil may be subjected to a degreasing treatment by an alkali immersion method, an electrolytic cleaning method, an acid cleaning method, an electrolytic acid cleaning method or the like before the aluminum alloy foil is subjected to a chemical conversion treatment. When a degreasing treatment is performed as described above, the chemical conversion treatment of the surface of the aluminum alloy foil can be further efficiently performed. When an acid degreasing agent with a fluorine-containing compound dissolved in an inorganic acid is used for degreasing treatment, not only a metal foil degreasing effect can be obtained but also a metal fluoride can be formed as a passive state, and in this case, only degreasing treatment may be performed.

### <1-1-5. Heat-sealable resin layer>

In the exterior member 101, the heat-sealable resin layer 101D is a layer (sealant layer) which corresponds to an innermost layer and performs a function of hermetically sealing the electrode assembly 200 with the heat-sealable resin layers 101D heat-sealed to each other during construction of the electrical storage device 10.

The resin forming the heat-sealable resin layer 101D is not particularly limited as long as it can be heat-sealed, a resin containing a polyolefin backbone such as a polyolefin or an acid-modified polyolefin is preferable. The resin forming the heat-sealable resin layer 101D can be confirmed to contain a polyolefin backbone by an analysis method such as infrared spectroscopy or gas chromatography-mass spectrometry. It is preferable that a peak derived from maleic anhydride is detected when the resin forming the heat-sealable resin layer 101D is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. When the heat-sealable resin layer 101D is a layer formed of a maleic anhydride-modified polyolefin, a peak derived from maleic anhydride is detected when measurement is performed by infrared spectroscopy. However, if the degree of acid modification is low, the peaks may be too small to be detected. In that case, the peaks can be analyzed by nuclear magnetic resonance spectroscopy.

Specific examples of the polyolefin to be acid-modified include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (e.g., block copolymers of propylene and ethylene) and random copolymers of polypropylene (e.g., random copolymers of propylene and ethylene); propylene-α-olefin copolymers; and terpolymers of ethylene-butene-propylene. Of these, polypropylene is preferable. The polyolefin resin in the case of a copolymer may be a block copolymer or a random copolymer. These polyolefin-based resins may be used alone, or may be used in combination of two or more thereof.

The polyolefin may be a cyclic polyolefin. The cyclic polyolefin is a copolymer of an olefin and a cyclic monomer, and examples of the olefin as a constituent monomer of the cyclic polyolefin include ethylene, propylene, 4-methyl-1-pentene, styrene, butadiene and isoprene. Examples of the cyclic monomer as a constituent monomer of the cyclic polyolefin include cyclic alkenes such as norbomene; cyclic dienes such as cyclopentadiene, dicyclopentadiene, cyclohexadiene and norbornadiene. Among these polyolefins, cyclic alkenes are preferable, and norbornene is more preferable.

The acid-modified polyolefin is a polymer with the polyolefin modified by subjecting the polyolefin to block polymerization or graft polymerization with an acid component. As the polyolefin to be acid-modified, the above-mentioned polyolefins, copolymers obtained by copolymerizing polar molecules such as acrylic acid or methacrylic acid with the above-mentioned polyolefins, polymers such as crosslinked polyolefins, or the like can also be used. Examples of the acid component to be used for acid modification include carboxylic acids such as maleic acid, acrylic acid, itaconic acid, crotonic acid, maleic anhydride and itaconic anhydride, and anhydrides thereof.

The acid-modified polyolefin may be an acid-modified cyclic polyolefin. The acid-modified cyclic polyolefin is a polymer obtained by copolymerizing a part of monomers forming the cyclic polyolefin in place of an acid component, or block-polymerizing or graft-polymerizing an acid component with the cyclic polyolefin. The cyclic polyolefin to be modified with an acid is the same as described above. The acid component to be used for acid modification is the same as the acid component used for modification of the polyolefin.

Examples of preferred acid-modified polyolefins include polyolefins modified with a carboxylic acid or an anhydride thereof, polypropylene modified with a carboxylic acid or an anhydride thereof, maleic anhydride-modified polyolefins, and maleic anhydride-modified polypropylene.

The heat-sealable resin layer 101D may be formed from one resin alone, or may be formed from a blend polymer obtained by combining two or more resins. Further, the heat-sealable resin layer 101D may be composed of only one layer, or may be composed of two or more layers with the same resin component or different resin components.

The heat-sealable resin layer 101D may contain a slipping agent etc. if necessary. When the heat-sealable resin layer 101D contains a slipping agent, the followability of the exterior member at corners and the like of the exterior member 101 can be improved. The slipping agent is not particularly limited, and a known slipping agent can be used. The slipping agent may be used alone, or may be used in combination of two or more thereof.

The slipping agent is not particularly limited, and is preferably an amide-based slipping agent. Specific examples of the slipping agent include those exemplified for the base material layer 101A. The slipping agents may be used alone, or may be used in combination of two or more thereof.

When a slipping agent is present on the surface of the heat-sealable resin layer 101D, the amount of the slipping agent present is not particularly limited, and is preferably about 10 to 50 mg/m2, more preferably about 15 to 40 mg/m2 from the viewpoint of improving the followability of the exterior member at corners and the like of the exterior member 101.

The slipping agent present on the surface of the heat-sealable resin layer 101D may be one obtained by exuding the slipping agent contained in the resin forming the heat-sealable resin layer 101D, or one obtained by applying a slipping agent to the surface of the heat-sealable resin layer 101D.

The thickness of the heat-sealable resin layer 101D is not particularly limited as long as the heat-sealable resin layers are heat-sealed to each other to perform a function of sealing the electrical storage device element, and the thickness is, for example, about 100 µm or less, preferably about 85 µm or less, more preferably about 15 to 85 µm. For example, when the thickness of the adhesive layer 101E described later is 10 µm or more, the thickness of the heat-sealable resin layer 101D is preferably about 85 µm or less, more preferably about 15 to 45 µm. For example, when the thickness of the adhesive layer 101E described later is less than 10 µm or the adhesive layer 101E is not provided, the thickness of the heat-sealable resin layer 101D is preferably about 20 µm or more, more preferably about 35 to 85 µm.

### <1-1-6. Adhesive layer>

In the exterior member 101, the adhesive layer 101E is a layer provided between the barrier layer 101C (or acid-resistant film) and the heat-sealable resin layer 101D if necessary for firmly bonding these layers to each other.

The adhesive layer 101E is formed from a resin capable of bonding the barrier layer 101C and the heat-sealable resin layer 101D to each other. It is preferable that the adhesive layer 101E is formed of a cured product of a resin composition containing a curable resin. The curable resin means a resin having hardenability, such as a thermosetting resin or an ionizing-radiation-curable resin, and does not have a clear melting peak temperature after curing, for example. The resin to be used for forming the adhesive layer 101E is, for example, the same as that of the adhesive exemplified for the adhesive agent layer 101B. Preferably, the resin to be used for forming the adhesive layer 101E contains a polyolefin backbone. Examples thereof include the polyolefins and acid-modified polyolefins exemplified for the heat-sealable resin layer 101D described above. The resin forming the adhesive layer 101E can be confirmed to contain a polyolefin backbone by an analysis method such as infrared spectroscopy, gas chromatography-mass spectrometry, and the analysis method is not particularly limited. In addition, it is preferable that a peak derived from maleic anhydride is detected when the resin forming the adhesive layer 101E is analyzed by infrared spectroscopy. For example, when a maleic anhydride-modified polyolefin is measured by infrared spectroscopy, peaks derived from maleic anhydride are detected near wavenumbers of 1760 cm⁻¹ and 1780 cm⁻¹. However, if the degree of acid modification is low, the peaks may be too small to be detected. In that case, the peaks can be analyzed by nuclear magnetic resonance spectroscopy.

From the viewpoint of firmly bonding the barrier layer 101C and the heat-sealable resin layer 101D to each other, it is preferable that the adhesive layer 101E contains an acid-modified polyolefin. As the acid-modified polyolefin, polyolefins modified with a carboxylic acid or an anhydride thereof, polypropylene modified with a carboxylic acid or an anhydride thereof, maleic anhydride-modified polyolefins, and maleic anhydride-modified polypropylene is especially preferable.

Further, from the viewpoint that the exterior member 101 is excellent in shape stability after molding while having a reduced thickness, the adhesive layer 101E is more preferably a cured product of a resin composition containing an acid-modified polyolefin and a curing agent. In this case, the acid-modified polyolefin and the curing agent form the curable resin. Preferred examples of the acid-modified polyolefin include those described above.

The adhesive layer 101E is preferably a cured product of a resin composition containing an acid-modified polyolefin and at least one selected from the group consisting of a compound having an isocyanate group, a compound having an oxazoline group, and a compound having an epoxy group, especially preferably a cured product of a resin composition containing an acid-modified polyolefin and at least one selected from the group consisting of a compound having an isocyanate group and a compound having an epoxy group. Preferably, the adhesive layer 101E preferably contains at least one selected from the group consisting of polyurethane, polyester and epoxy resin. More preferably, the adhesive layer 5 contains polyurethane and epoxy resin. As the polyester, for example, an amide ester resin is preferable. The amide ester resin is generally produced by reaction of a carboxyl group with an oxazoline group. The adhesive layer 101E is more preferably a cured product of a resin composition containing at least one of these resins and the acid-modified polyolefin. When an unreacted substance of a curing agent, such as a compound having an isocyanate group, a compound having an oxazoline group, or an epoxy resin remains in the adhesive layer 101E, the presence of the unreacted substance can be confirmed by, for example, a method selected from infrared spectroscopy, Raman spectroscopy, time-of-flight secondary ion mass spectrometry (TOF-SIMS) and the like.

From the viewpoint of further improving adhesion between the barrier layer 101C and the adhesive layer 101E, the adhesive layer 101E is preferably a cured product of a resin composition containing a curing agent having at least one selected from the group consisting of an oxygen atom, a heterocyclic ring, a C=N bond, and a CO-C bond. Examples of the curing agent having a heterocyclic ring include curing agents having an oxazoline group, and curing agents having an epoxy group. Examples of the curing agent having a C=N bond include curing agents having an oxazoline group and curing agents having an isocyanate group. Examples of the curing agent having a C-O-C bond include curing agents having an oxazoline group, curing agents having an epoxy group, and polyurethane. Whether the adhesive layer 101E is a cured product of a resin composition containing any of these curing agents can be confirmed by, for example, a method such as gas chromatography-mass spectrometry (GCMS), infrared spectroscopy (IR), time-of-flight secondary ion mass spectrometry (TOF-SIMS), or X-ray photoelectron spectroscopy (XPS).

The compound having an isocyanate group is not particularly limited, and is preferably a polyfunctional isocyanate compound from the viewpoint of effectively improving adhesion between the barrier layer 101C and the adhesive layer 101E. The polyfunctional isocyanate compound is not particularly limited as long as it is a compound having two or more isocyanate groups. Specific examples of the polyfunctional isocyanate-based curing agent include pentane diisocyanate (PDI), isophorone diisocyanate (IPDI), hexamethylene diisocyanate (HDI), tolylene diisocyanate (TDI), diphenylmethane diisocyanate (MDI), polymerized or nurated products thereof, mixtures thereof, and copolymers of these compounds with other polymers. Examples thereof include adduct forms, biuret forms, and isocyanurate forms.

The content of the compound having an isocyanate group in the adhesive layer101E is preferably in the range of 0.1 to 50 mass%, more preferably in the range of 0.5 to 40 mass% in the resin composition forming the adhesive layer 101E. This enables effective improvement of adhesion between the barrier layer 101C and the adhesive layer 101E.

The compound having an oxazoline group is not particularly limited as long as it is a compound having an oxazoline backbone. Specific examples of the compound having an oxazoline group include compounds having a polystyrene main chain and compounds having an acrylic main chain. Examples of the commercially available product include EPOCROS series manufactured by Nippon Shokubai Co., Ltd.

The proportion of the compound having an oxazoline group in the adhesive layer 101E is preferably in the range of 0.1 to 50 mass%, more preferably in the range of 0.5 to 40 mass% in the resin composition forming the adhesive layer 101E. This enables effective improvement of adhesion between the barrier layer 101C and the adhesive layer 101E.

Examples of the compound having an epoxy group include epoxy resins. The epoxy resin is not particularly limited as long as it is a resin capable of forming a crosslinked structure by epoxy groups existing in the molecule, and a known epoxy resin can be used. The weight average molecular weight of the epoxy resin is preferably about 50 to 2,000, more preferably about 100 to 1,000, still more preferably about 200 to 800. In the first present disclosure, the weight average molecular weight of the epoxy resin is a value obtained by performing measurement by gel permeation chromatography (GPC) under the condition of using polystyrene as a standard sample.

Specific examples of the epoxy resin include glycidyl ether derivatives of trimethylolpropane, bisphenol A diglycidyl ether, modified bisphenol A diglycidyl ether, novolak glycidyl ether, glycerin polyglycidyl ether and polyglycerin polyglycidyl ether. The epoxy resins may be used alone, or may be used in combination of two or more thereof.

The proportion of the epoxy resin in the adhesive layer 101E is preferably in the range of 0.1 to 50 mass%, more preferably in the range of 0.5 to 40 mass% in the resin composition forming the adhesive layer 101E. This enables effective improvement of adhesion between the barrier layer 101C and the adhesive layer 101E.

The polyurethane is not particularly limited, and a known polyurethane can be used. The adhesive layer 101E may be, for example, a cured product of two-liquid curable polyurethane.

The proportion of the polyurethane in the adhesive layer 101E is preferably in the range of 0.1 to 50 mass%, more preferably in the range of 0.5 to 40 mass% in the resin composition forming the adhesive layer 101E. This enables effective improvement of adhesion between the barrier layer 101C and the adhesive layer 101E in an atmosphere including a component which induces corrosion of the barrier layer, such as an electrolytic solution.

When the adhesive layer 101E is a cured product of a resin composition containing at least one selected from the group consisting of a compound having an isocyanate group, a compound having an oxazoline group and an epoxy resin, and the acid-modified polyolefin, the acid-modified polyolefin functions as a main component, and the compound having an isocyanate group, the compound having an oxazoline group, and the compound having an epoxy group each function as a curing agent.

The thickness of the adhesive layer 101E is preferably about 50 µm or less, about 40 µm or less, about 30 µm or less, about 20 µm or less, or about 5 µm or less for the upper limit, and preferably about 0.1 µm or more or about 0.5 µm or more for the lower limit, and is preferably in the range of about 0.1 to 50 µm, about 0.1 to 40 µm, about 0.1 to 30 µm, about 0.1 to 20 µm, about 0.1 to 5 µm, about 0.5 to 50 µm, about 0.5 to 40 µm, about 0.5 to 30 µm, about 0.5 to 20 µm or about 0.5 to 5 µm. More specifically, the thickness is preferably about 1 to 10 µm, more preferably about 1 to 5 µm in the case of the adhesive exemplified for the adhesive agent layer 101B or a cured product of an acid-modified polyolefin with a curing agent. When any of the resins exemplified for the heat-sealable resin layer 101D is used, the thickness of the adhesive layer is preferably about 2 to 50 µm, more preferably about 10 to 40 µm. When the adhesive layer 101E is a cured product of a resin composition containing the adhesive exemplified for the adhesive agent layer 101B or an acid-modified polyolefin and a curing agent, the adhesive layer 101E can be formed by, for example, applying the resin composition and curing the resin composition by heating or the like. When the resin exemplified for the heat-sealable resin layer 101D is used, for example, extrusion molding of the heat-sealable resin layer 101D and the adhesive layer 101E can be performed.

### <1-1-7. Surface coating layer 101F>

The exterior member 101 may include a surface coating layer 101F on the base material layer 101A (on a surface of the base material layer 101A on a side opposite to the barrier layer 101C) if necessary for the purpose of improving at least one of designability, electrolytic solution resistance, scratch resistance, followability of the exterior member at corners and the like, etc. The surface coating layer 101F is a layer located on the outermost layer side of the exterior member 101 when the electrical storage device is constructed using the exterior member 101.

The surface coating layer 101F can be formed from, for example, resin such as polyvinylidene chloride, polyester, polyurethane, acrylic resin or epoxy resin.

When the resin forming the surface coating layer 101F is a curable resin, the resin may be any of a one-liquid curable type and a two-liquid curable type, and is preferably a two-liquid curable type. Examples of the two-liquid curable resin include two-liquid curable polyurethane, two-liquid curable polyester and two-liquid curable epoxy resins. Of these, two-liquid curable polyurethane is preferable.

Examples of the two-liquid curable polyurethane include polyurethane which contains a main component containing a polyol compound and a curing agent containing an isocyanate compound. The polyurethane is preferably two-liquid curable polyurethane having polyol such as polyester polyol, polyether polyol or acrylic polyol as a main component, and aromatic or aliphatic polyisocyanate as a curing agent. Preferably, polyester polyol having a hydroxyl group in the side chain in addition to a hydroxyl group at the end of the repeating unit is used as the polyol compound. Since the surface coating layer 101F is formed of polyurethane, excellent electrolytic solution resistance is imparted to the exterior member 101.

If necessary, the surface coating layer 101F may contain additives such as the slipping agent, an anti-blocking agent, a matting agent, a flame retardant, an antioxidant, a tackifier and an anti-static agent on at least one of the surface and the inside of the surface coating layer 101F according to the functionality and the like to be imparted to the surface coating layer 101F and the surface thereof. The additives are in the form of, for example, fine particles having an average particle diameter of about 0.5 nm to 5 µm. The average particle diameter of the additives is a median diameter measured by a laser diffraction/scattering particle size distribution measuring apparatus.

The additives may be either inorganic substances or organic substances. The shape of the additive is not particularly limited, and examples thereof include a spherical shape, a fibrous shape, a plate shape, an amorphous shape and a scaly shape.

Specific examples of the additives include talc, silica, graphite, kaolin, montmorillonite, mica, hydrotalcite, silica gel, zeolite, aluminum hydroxide, magnesium hydroxide, zinc oxide, magnesium oxide, aluminum oxide, neodymium oxide, antimony oxide, titanium oxide, cerium oxide, calcium sulfate, barium sulfate, calcium carbonate, calcium silicate, lithium carbonate, calcium benzoate, calcium oxalate, magnesium stearate, alumina, carbon black, carbon nanotubes, high-melting-point nylons, acrylate resins, crosslinked acryl, crosslinked styrene, crosslinked polyethylene, benzoguanamine, gold, aluminum, copper and nickel. The additives may be used alone, or may be used in combination of two or more thereof. Of these additives, silica, barium sulfate and titanium oxide are preferable from the viewpoint of dispersion stability, costs, and so on. The surface of the additive may be subjected to various kinds of surface treatments such as insulation treatment and dispersibility enhancing treatment.

The method for forming the surface coating layer 101F is not particularly limited, and examples thereof include a method in which a resin for forming the surface coating layer 101F is applied. When the additive is added to the surface coating layer 101F, a resin mixed with the additive may be applied.

The thickness of the surface coating layer 101F is not particularly limited as long as the above-mentioned function as the surface coating layer 101F is performed, and it is, for example, about 0.5 to 10 µm, preferably about 1 to 5 µm.

### <1-1-8. Method for manufacturing exterior member>

The method for manufacturing the exterior member 101 is not particularly limited as long as a laminate is obtained in which the layers of the exterior member 101 of the present embodiment are laminated. Examples thereof include a method including the step of laminating at least the base material layer 101A, the barrier layer 101C and the heat-sealable resin layer 101D in the stated order. As described above, an aluminum alloy foil satisfying the predetermined composition described above can be used as the barrier layer 101C.

One example of the method for manufacturing the exterior member 101 is as follows. First, a laminate is formed in which the base material layer 101A, the adhesive agent layer 101B and the barrier layer 101C is laminated in the stated order (hereinafter, sometimes referred to as a "laminate A"). Specifically, the laminate A can be formed by a dry lamination method in which an adhesive for use in formation of the adhesive agent layer 101B is applied onto the base material layer 101A or the barrier layer 101C, the surface of which is subjected to a chemical conversion treatment if necessary, using a coating method such as a gravure coating method or a roll coating method, and the adhesive is dried, the barrier layer 101C or the base material layer 101A is then laminated, and the adhesive agent layer 101B is cured.

Subsequently, the heat-sealable resin layer 101D is laminated on the barrier layer 101C of the laminate A. When the heat-sealable resin layer 101D is laminated directly on the barrier layer 101C, the heat-sealable resin layer 101D may be laminated onto the barrier layer 101C of the laminate A by a method such as a thermal lamination method or an extrusion lamination method. When the adhesive layer 101E is provided between the barrier layer 101C and the heat-sealable resin layer 101D, mention is made of, for example, (1) a method in which the adhesive layer 101E and the heat-sealable resin layer 101D are extruded to be laminated on the barrier layer 101C of the laminate A (extrusion lamination method or tandem lamination method); (2) a method in which the adhesive layer 101E and the heat-sealable resin layer 101D are laminated to form a laminate separately, and the laminate is laminated on the barrier layer 101C of the laminate A by a thermal lamination method, or a method in which a laminate with the adhesive layer 101E laminated on the barrier layer 101C of the laminate A is formed, and laminated to the heat-sealable resin layer 101D by a thermal lamination method; (3) a method in which the melted adhesive layer 101E is poured between the barrier layer 101C of the laminate A and the heat-sealable resin layer 101D formed in a sheet shape beforehand, and simultaneously the laminate A and the heat-sealable resin layer 101D are bonded to each other with the adhesive layer 101E interposed therebetween (sandwich lamination); and (4) an adhesive for forming the adhesive layer 101E is applied by solution coating and dried or baked to laminate the adhesive on the barrier layer 101C of the laminate A, and the heat-sealable resin layer 101D formed in a sheet shape in advance is laminated on the adhesive layer 101E.

When the surface coating layer 101F is provided, the surface coating layer 101F is laminated on a surface of the base material layer 101A on a side opposite to the barrier layer 101C. The surface coating layer 101F can be formed by, for example, coating a surface of the base material layer 101A with the resin that forms the surface coating layer 101F. The order of the step of laminating the barrier layer 101C on a surface of the base material layer 101A and the step of laminating the surface coating layer 101F on a surface of the base material layer 101A is not particularly limited. For example, the surface coating layer 101F may be formed on a surface of the base material layer 101A, followed by forming the barrier layer 101C on a surface of the base material layer 101A on a side opposite to the surface coating layer 101F.

As described above, a laminate including the surface coating layer 101F provided if necessary, the base material layer 101A, the adhesive agent layer 101B provided if necessary, the barrier layer 101C, the adhesive layer 101E provided if necessary, and the heat-sealable resin layer 101D in this order is formed, and the laminate may be further subjected to a heating treatment for strengthening the bondability of the adhesive agent layer 101B and the adhesive layer 101E provided if necessary.

In the exterior member 101, the layers forming the laminate may be subjected to surface activation treatment such as corona treatment, blast treatment, oxidation treatment or ozone treatment if necessary to improve processing suitability. For example, by subjecting a surface of the base material layer 101A, which is opposite to the barrier layer 101C, to a corona treatment, the ink printability of the surface of the base material layer 101A can be improved.

It is preferable that the exterior member 101 has one or more layers (hereinafter, referred to as a "buffer layer") having a buffer function outside the heat-sealable resin layer 101D, more preferably outside the barrier layer 101C. The buffer layer may be laminated on the outer side of the base material layer 101A, and the base material layer 101A may also have a function of the buffer layer. When the exterior member 101 has a plurality of buffer layers, the buffer layers may be adjacent to each other, or may be laminated with the base material layer 101A, the barrier layer 101C or the like interposed therebetween.

The material for forming the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material forming the nonwoven fabric is preferably a material having excellent heat resistance. When the buffer layer is formed of a nonwoven fabric, the lower limit of the thickness of the buffer layer is preferably 100 µm, more preferably 200 µm, still more preferably 1000 µm. When the buffer layer is formed of a nonwoven fabric, the upper limit of the thickness of the buffer layer is preferably 5,000 µm, more preferably 3,000 µm. A preferable range of the thickness of the buffer layer is 100 µm to 5,000 µm, 100 µm to 3,000 µm, 200 µm to 3,000 µm, 1,000 µm to 5,000 µm, or 1,000 µm to 3,000 µm. In particular, the thickness of the buffer layer is most preferably in the range of 1,000 µm to 3,000 µm.

When the buffer layer is formed of rubber, the lower limit of the thickness of the buffer layer is preferably 0.5 mm. When the buffer layer is formed of rubber, the upper limit of the thickness of the buffer layer is preferably 10 mm, more preferably 5 mm, still more preferably 2 mm. When the buffer layer is formed of rubber, the thickness of the buffer layer is preferably in the range of 0.5 mm to 10 mm, 0.5 mm to 5 mm, or 0.5 mm to 2 mm.

When the exterior member 101 has a buffer layer, the buffer layer functions as a cushion, so that the exterior member 101 is inhibited from being damaged by an impact in case where the electrical storage device 10 falls, or handling during manufacturing of the electrical storage device 10.

Fig. 4 is a view showing, from the side, a state in which the exterior member 101 is wound around the electrode assembly 200 in the course of manufacturing the electrical storage device 10. As shown in Fig. 4, the exterior member 101 is wound around the periphery of the electrode assembly 200. In this case, the outermost layer of the electrode assembly 200 is not an electrode, and may be, for example, a protective tape or a separator. A first seal portion 110 is formed by heat-sealing the opposed surfaces (heat-sealable resin layers) of the exterior member 101 with the exterior member 101 wound around the periphery of the electrode assembly 200.

In the present embodiment, the root of the first seal portion 110 is on a side 135 of the outer packaging 100. The side 135 is formed at a boundary between a first surface 130 and a second surface 140 having an area smaller than that of the first surface 130. That is, it can be said that the root of the first seal portion 110 is formed at a boundary between the first surface 130 and the second surface 140, and does not exist on either the first surface 130 or the second surface 140. The root of the first seal portion 110 may be present on the second surface 140. In the electrical storage device 10, the first seal portion 110 is bent to the second surface 140 side with respect to the side 135. In the electrical storage device 10, the first seal portion 110 is in contact with the second surface 140, and covers substantially the entire second surface 140. The term "substantially entire second surface 140" means a region accounting for 75% or more of the area of the second surface 140.

That is, in the electrical storage device 10, the first seal portion 110 is not formed on the first surface 130 having a large area. The first surface 130 is flatter as compared to a case where a seal portion such as the first seal portion 110 is in contact with the first surface 130. Therefore, even if another electrical storage device 10 is placed on the first surface 130, the other electrical storage device 10 does not tilt. As a result, the electrical storage device 10 enables suppression of unevenness of the distribution of pressure applied to the lower electrical storage device 10 when a plurality of electrical storage devices 10 are stacked. In other words, it can be said that when a module is formed by stacking a plurality of electrical storage devices 10, the first seal portion 110 is not disposed on a surface adjacent to the neighboring electrical storage device 10 (the first surface 130). In an all-solid-state battery, such a configuration is preferable from the viewpoint that even application of high pressure from the outer surface of the battery is required for exhibiting battery performance.

In the electrical storage device 10 according to the present embodiment, the root of the first seal portion 110 is on a side 135 of the outer packaging 100. Therefore, in the electrical storage device 10, it is possible to secure a wider joining region in the first seal portion 110 as compared to a case where the root of the first seal portion 110 is present on the second surface 140 (for example, at the central part of the second surface 140 in the direction of arrow UD). The j oining region of the first seal portion 110 is not necessarily the entire region of the first seal portion 110, and may be, for example, a part of the first seal portion 110, for example, only an area in the vicinity of the root of the first seal portion 110.

In the electrical storage device 10, substantially the entire second surface 140 is covered with the first seal portion 110. That is, in the electrical storage device 10, for example, the length of the first seal portion 110 in the direction of arrow UD is larger as compared to a case where the first seal portion 110 covers only 50% or less of the second surface 140 (see Fig. 3). Therefore, in the electrical storage device 10, it is possible to secure a wide joining region in the first seal portion 110. Since substantially the entire second surface 140 is covered with the first seal portion 110, the electrical storage device 10 stabilizes even if the electrical storage device 10 is disposed upright such that the second surface 140 is in contact with the placement surface. That is, the electrical storage device 10 hardly tilts with respect to the placement surface. Therefore, such a configuration is effective when, for example, a plurality of electrical storage devices 10 are arranged side by side to form a module.

Fig. 5 is a view showing, from below, a state in which the exterior member 101 is wound around the electrode assembly 200 in the course of manufacturing the electrical storage device 10. In the electrical storage device 10, the direction along the side 135 is a transverse direction (TD) of the exterior member 101 and the direction perpendicular to the side 135 is a machine direction (MD) of the exterior member 101 as shown in Fig. 5. That is, the direction along the side 135 is a direction (TD) perpendicular to the machine direction (MD) of the exterior member 101.

In the electrical storage device 10, the first seal portion 110 is bent along the side 135, and the direction along the side 135 is a direction perpendicular to the machine direction of the exterior member 101. Therefore, in this electrical storage device 10, it is possible to reduce a possibility that the first seal portion 110 is broken by bending of the first seal portion 110 because the exterior member 101 is unlikely to break even if a fold line is formed in a direction perpendicular to the machine direction of the exterior member 101.

The machine direction (MD) of the exterior member 101 corresponds to a rolling direction (RD) of a metal foil (aluminum alloy foil or the like) of the barrier layer in the exterior member 101. TD of the exterior member 101 corresponds to TD of the metal foil. The rolling direction (RD) of the metal foil can be identified by rolling streaks.

A plurality of cross-sections of the heat-sealable resin layer of the exterior member 101 are observed with an electron microscope to examine a sea-island structure, and a direction parallel to a cross-section having the largest average of diameters of islands in a direction perpendicular to the thickness direction of the heat-sealable resin layer (hereinafter, also referred to as a "length direction of the heat-sealable resin layer") can be determined as MD. This method can be used to identify MD of the exterior member 101 if the MD cannot be identified by the rolling streaks of the metal foil.

Specifically, a cross-section in the length direction of the heat-sealable resin layer and cross-sections (a total of 10 cross-sections) at angular intervals of 10 degrees from a direction parallel to the cross-section in the length direction to a direction perpendicular to the cross-section in the length direction are observed with an electron microscope photograph to examine sea-island structures. Next, for the each island on each cross-section, the linear distance between both ends perpendicular to the thickness direction of the heat-sealable resin layer is measured to determine a diameter d of the island. Next, in each cross-section, the average of the top 20 island diameters d in descending order is calculated. The direction parallel to a cross-section having the largest average of the island diameters d is determined as MD.

Fig. 6 is a sectional view taken along VI-VI in Fig. 2. As shown in Fig. 6, the second seal portion 120 is sealed with the outer packaging 100 holding the electrode terminal 300.

Fig. 7 is a diagram for illustrating a method for forming the second seal portion 120. As shown in Fig. 7, the exterior member 101 is folded, and the opposed surfaces (heat-sealable resin layers) of the exterior member 101 are heat-sealed to form the second seal portion 120. Although not shown in Fig. 7, the electrode terminal 300 is located between the opposed surfaces of the exterior member 101. An adhesive film that is bonded to both metal and resin may be disposed between the electrode terminal 300 and the exterior member 101.

Referring to Fig. 6 again, the electrode assembly 200 includes a plurality of electrodes 210 (positive and negative electrodes). A current collector 215 extending from each electrode 210 is connected to the electrode terminal 300. In the electrical storage device 10, a part of the electrode terminal 300, which is outside the outer packaging 100 is located to extend over substantially half the thickness of the electrical storage device 10 in the thickness direction of the electrical storage device 10. That is, the length L2 is substantially half the length L1. The term "substantially half the thickness of the electrical storage device 10" means 35% to 65% of the thickness of the electrical storage device 10.

Therefore, in the electrical storage device 10, for example, it is possible to reduce a difference between the longest and the shortest of distances between a plurality of electrodes 210 and the electrode terminal 300 as compared to a case where the electrode terminal 300 is substantially identical in location to the first surface 130 in the thickness direction of the electrical storage device 10.

### <1-2. Method for manufacturing electrical storage device>

Fig. 8 is a flowchart showing a procedure for manufacturing the electrical storage device 10. The step shown in Fig. 8 is carried out by, for example, an apparatus for manufacturing the electrical storage device 10.

The manufacturing apparatus winds the exterior member 101 around the electrode assembly 200 (step S100). The manufacturing apparatus forms the first seal portion 110 by heat-sealing the opposed surfaces (heat-sealable resin layers) of the exterior member 101 (step S110). In this way, an incomplete article shown in Figs. 4 and 5 is produced.

The manufacturing apparatus bends the first seal portion 110 such that the first seal portion 110 comes into contact with the second surface 140 (step S120). The manufacturing apparatus folds the exterior member 101 in with the electrode assembly 200 housed therein, and heat-seals the opposed surfaces of (heat-sealable resin layers) of the exterior member 101 to form the second seal portion 120 (step S130). In this way, the electrical storage device 10 is completed.

### <1-3. Characteristics>

As described above, in the electrical storage device 10 according to Embodiment 1, the first seal portion 110 is bent toward the second surface 140 with a small area. That is, the first seal portion 110 does not exist on the first surface 130 with a large area. Therefore, even if another electrical storage device 10 is placed on the first surface 130, the other electrical storage device 10 does not tilt. As a result, the electrical storage device 10 enables suppression of unevenness of the distribution of pressure applied to the lower electrical storage device 10 when a plurality of electrical storage devices 10 are stacked. In the case of use for an all-solid-state battery, the packaging form according to the present invention is preferable because even application of high pressure from the outer surface of the battery is required for exhibiting battery performance. In the electrical storage device 10, the root of the first seal portion 110 is on a side 135 of the outer packaging 100. Therefore, in the electrical storage device 10, it is possible to secure a larger joining width in the first seal portion 110 in placement of the first seal portion 110 on the second surface 140 as compared to a case where the root of the first seal portion 110 is present on the second surface 140.

### [2. Embodiment 2]

In the electrical storage device 10 according to Embodiment 1, the second seal portion 120 is formed by folding the exterior member 101 and heat-sealing the opposed surfaces of the exterior member 101. However, the shape of the second seal portion 120 and the method for forming the second seal portion 120 are not limited thereto. Hereinafter, differences from Embodiment 1 will be mainly described, and description of the same portions as in Embodiment 1 will be omitted.

### <2-1. Configuration of electrical storage device>

Fig. 9 is a plan view schematically showing an electrical storage device 10X according to Embodiment 2. Fig. 10 is a side view schematically showing the electrical storage device 10X. Fig. 11 is a perspective view schematically showing a lid 400.

Referring to Figs. 9, 10 and 11, an outer packaging 100X is formed by fitting the lid 400 into each of openings at both ends of an exterior member 101 wound around an electrode assembly 200. A second seal portion 120X is formed by heat-sealing the exterior member 101 and the lid 400 with the lid 400 fitted in the opening.

The lid 400 is a bottomed tray-shaped member having a rectangular shape in plan view, and is formed by, for example, cold-molding the exterior member 101. The lid 400 is not necessarily formed of the exterior member 101, and may be a metal molded article or a resin molded article. In the electrical storage device 10X, the lid 400 is disposed such that the bottom surface side of the lid 400 is located inside the outer packaging 100X. In the electrical storage device 10X, the bottom surface side of the lid 400 is not necessarily located inside the outer packaging 100X. In the electrical storage device 10X, the bottom surface side of the lid 400 may be located outside the outer packaging 100X.

The electrode terminal 300 extends between the lid 400 and the exterior member 101 and protrudes to the outside of the outer packaging 100X while the electrode assembly 200 is housed. That is, the lid 400 and the exterior member 101 are heat-sealed with the electrode terminal 300 held therebetween. In the electrical storage device 10X, the location at which the electrode terminal 300 protrudes to the outside is not necessarily between the lid 400 and the exterior member 101. For example, the electrode terminal 300 may protrude to the outside from a hole formed in any of the six surfaces of the outer packaging 100X. In this case, a small gap between the outer packaging 100X and the electrode terminal 300 is filled with, for example, resin.

In the electrical storage device 10, the lid 400 and the electrode terminal 300 are provided as separate bodies. However, the lid 400 and the electrode terminal 300 are not necessarily provided as separate bodies. For example, the lid 400 and the electrode terminal 300 may be integrally formed.

Fig. 12 is a view showing a first example in which the lid 400 and the electrode terminal 300 are integrally formed. In the first example, the electrode terminal 300 is heat-sealed to the side surface of the lid 400 in advance as shown in Fig. 12. For example, when the lid 400 is formed of the exterior member 101, an adhesive film that is bonded to both metal and resin may be disposed between the lid 400 and the electrode terminal 300.

Fig. 13 is a view showing a second example in which the lid 400 and the electrode terminal 300 are integrally formed. In the second example, the electrode terminal 300 extends through a hole formed in the bottom surface portion of the lid 400 as shown in Fig. 13. A small gap in the bottom surface of the lid 400 is filled with, for example, resin.

In the electrical storage device 10X, a gas valve may be fitted in a hole formed in any of six surfaces of the second seal portion 120X or the outer packaging 100X. The gas valve includes a check valve or a breaking valve, and is configured to ensure that if the pressure of the inside of the outer packaging 100X increases due to generation of gas in the electrical storage device 10X, the pressure is decreased.

### <2-2. Method for manufacturing electrical storage device>

Fig. 14 is a flowchart showing a procedure for manufacturing the electrical storage device 10X. The step shown in Fig. 14 is carried out by, for example, an apparatus for manufacturing the electrical storage device 10X.

The manufacturing apparatus winds the exterior member 101 around the electrode assembly 200 (step S200). The manufacturing apparatus forms the first seal portion 110 by heat-sealing the opposed surfaces (heat-sealable resin layers) of the exterior member 101 (step S210). In this way, an incomplete article shown in Figs. 4 and 5 is produced.

The manufacturing apparatus bends the first seal portion 110 such that the first seal portion 110 comes into contact with the second surface 140 (step S220). The manufacturing apparatus houses the electrode assembly 200 in the incomplete article produced in step S220, and attaches the lid 400 to each of the openings at both ends (step S230). The manufacturing apparatus forms the second seal portion 120X by heat-sealing the exterior member 101 and the lid 400 (step S240). In this way, the electrical storage device 10X is completed.

### <2-3. Characteristics>

In the electrical storage device 10X according to Embodiment 2, the first seal portion 110 is bent toward the second surface 140 with a small area. Therefore, the electrical storage device 10X enables suppression of unevenness of the distribution of pressure applied to the lower electrical storage device 10X when a plurality of electrical storage devices 10X are stacked.

### <2-4. Other characteristics>

In the electrical storage device 10X according to Embodiment 2, the first seal portion 110 is not necessarily bent toward the second surface 140 with a small area. For example, the first seal portion 110 may be bent toward the first surface 130 with a large area. The root of the first seal portion 110 is not necessarily on the side 135 of the outer packaging 100X. The root of the first seal portion 110 may be located on a surface of the outer packaging 100X which excludes the lid 400. Even in this case, the electrical storage device 10X according to Embodiment 2 has, for example, the following characteristics.

The electrical storage device 10X includes an electrode assembly (electrode assembly 200), and an outer packaging (outer packaging 100X) which seals the electrode assembly (electrode assembly 200), and the outer packaging (outer packaging 100X) includes an exterior member (exterior member 101) which is wound around the electrode assembly (electrode assembly 200) and has openings formed at both end parts thereof, and a lid (lid 400) which seals the openings.

In the electrical storage device 10X, it is not the case that as in Embodiment 1, the second seal portion 120X is formed by heat-sealing the opposed surfaces of the exterior member 101 (see Fig. 7). In the electrical storage device 10X, the opening of the exterior member 101 wound around the electrode assembly 200 is sealed by the lid 400. That is, the second seal portion 120X is formed at a portion where the lid 400 and the exterior member 101 overlap (see Figs. 9 and 10). Such a configuration enables the region of the second seal portion 120X to be easily narrowed by adjusting a depth L3 of the lid 400 (Fig. 11).

In the electrical storage device 10X, an excessive load caused by a corner C1 piercing the exterior member 101 is not generated at a location where the corner C1 of the electrode assembly 200 is covered in the exterior member 101 (Figs. 9 and 10). In the electrical storage device 10X, it is not the case that as in Embodiment 1, the second seal portion 120X is formed by heat-sealing the opposed surfaces of the exterior member 101 as described above.

The procedure for manufacturing the electrical storage device 10X is not limited to the procedure shown in the flowchart of Fig. 14. For example, the electrical storage device 10X may be manufactured by the procedure shown in the flowchart of Fig. 15.

Fig. 15 is a flowchart showing another procedure for manufacturing the electrical storage device 10X according to Embodiment 2. The step shown in Fig. 15 is carried out by, for example, an apparatus for manufacturing the electrical storage device 10X. The manufacturing apparatus attaches to the electrode assembly 200 a member in which the electrode terminal 300 and the lid 400 are integrated (for example, a member shown in Figs. 12 and 13) (step S250). For example, the electrode terminal 300 is welded to the electrode assembly 200. Thereafter, the manufacturing apparatus winds the exterior member 101 around the electrode assembly 200 (step S260). The manufacturing apparatus forms the first seal portion 110 by heat-sealing the opposed surfaces (heat-sealable resin layers) of the exterior member 101, and forms the second seal portion 120X by heat-sealing the exterior member 101 and the lid 400 (step S270). In this way, the electrical storage device 10X is completed. The electrical storage device 10X may be manufactured by this procedure.

### [3. Embodiments 3]

It is common practice to pass through a step of aging a temporarily sealed electrical storage device in an environment at a predetermined time for a predetermined time (hereinafter, referred to as an aging step) for the purpose of, for example, allowing an electrolytic solution to permeate an electrode assembly in the battery manufacturing process. Gas is generated from the electrode assembly 200 in the aging step, and it is necessary to discharge the gas to the outside of the battery. The electrical storage device 10X according to Embodiment 2 is not provided with a mechanism for removing gas generated in the aging step at the final stage of manufacturing of the electrical storage device 10X. An electrical storage device 10Y according to Embodiment 3 is provided with a mechanism for removing gas generated from an electrode assembly 200 at the final stage of manufacturing of the electrical storage device 10Y. Hereinafter, differences from Embodiment 2 will be mainly described, and description of the same portions as in Embodiment 2 will be omitted.

### <3-1. Configuration of electrical storage device>

Fig. 16 is a view showing, from the side, a state in which an exterior member 101Y is wound around the electrode assembly 200 in the course of manufacturing the electrical storage device 10. Fig. 17 is a view showing, from below, a state in which the exterior member 101Y is wound around the electrode assembly 200 and a lid 400 is attached to the exterior member 101Y in the course of manufacturing the electrical storage device 10Y.

As shown in Figs. 16 and 17, a piece portion 150 is formed with the exterior member 101Y wound around the electrode assembly 200. The piece portion 150 is formed by joining the opposed surfaces of the exterior member 101Y wound around the electrode assembly 200. More specifically, the piece portion 150 is formed by joining (heat-sealing) the peripheral edges of the opposed surfaces of the exterior member 101Y wound around the electrode assembly 200. That is, in the piece portion 150, a first seal portion 154 is formed on the peripheral edge.

In the piece portion 150, a space 152 is formed in which the opposed surfaces of the exterior member 101Y are not joined. In the vicinity of a side 135, joined regions 151 where the opposed surfaces of the exterior member 101Y are joined and non-joined regions 153 where the opposed surfaces of the exterior member 101Y are not joined are alternately arranged. That is, in the piece portion 150, a pattern of joined regions 151 is formed along the side 135.

Gas generated from the electrode assembly 200 is discharged to the outside of the outer packaging 100Y by releasing the outer packaging 100Y from the sealed state by, for example, cutting a part of the piece portion 150. Here, the gas discharged to the outside of the outer packaging 100Y is not limited to gas generated from the electrode assembly 200, and may be gas other than the gas generated from the electrode assembly 200, such as air, water vapor or hydrogen sulfide.

Thereafter, a portion including regions near the side 135 is zonally heat-sealed to bring the outer packaging 100Y into a sealed state again. In this way, the electrical storage device 10Y is completed. In the completed electrical storage device 10Y, regions with a high joining force between the opposed surfaces of the exterior member 101Y and regions with a low joining force between the surfaces are alternately arranged along the side 135 in the vicinity of the side 135. In other words, in the heat-sealed portion near the side 135, thin portions and thick portions are alternately arranged along the side 135. This is because heat-sealing is performed in the vicinity of the side 135 again, resulting in single sealing in the non0joined region 153 and double sealing in the joined region 151.

### <3-2. Method for manufacturing electrical storage device>

Fig. 18 is a flowchart showing a procedure for manufacturing the electrical storage device 10Y. The step shown in Fig. 18 is carried out by, for example, an apparatus for manufacturing the electrical storage device 10Y.

The manufacturing apparatus winds the exterior member 101Y around the electrode assembly 200 (step S300). The manufacturing apparatus forms the first seal portion 154 by heat-sealing the peripheral edges of the opposed surfaces (heat-sealable resin layers) of the exterior member 101Y (step S310). The manufacturing apparatus forms a pattern of joined regions 151 by heat-sealing the opposed surfaces of the exterior member 101Y in the vicinity of the side 135 (step S320).

The manufacturing apparatus attaches a lid 400 to each of the openings at both ends with the electrode assembly 200 housed in the incomplete article produced in step S320 (step S330). The manufacturing apparatus forms the second seal portion 120X by heat-sealing the exterior member 101Y and the lid 400 (step S340). Thereafter, an aging step is carried out.

By, for example, cutting the piece portion 150, the manufacturing apparatus removes the gas generated in the aging step (step S350). The manufacturing apparatus reseals the outer packaging 100Y by zonally heat-sealing a portion of the piece portion 150 which includes joined regions 151, and removing the end edge portion (step S360). Thereafter, the piece portion 150 is bent toward the second surface 140 to complete the electrical storage device 10Y.

### <3-3. Characteristics>

In the electrical storage device 10Y according to Embodiment 3, the piece portion 150 including the first seal portion 154 is bent toward the second surface 140 with a small area. Therefore, the electrical storage device 10Y enables suppression of unevenness of the distribution of pressure applied to the lower electrical storage device 10Y when a plurality of electrical storage devices 10Y are stacked. In the case of use for an all-solid-state battery, the packaging form according to the present invention is preferable because even application of high pressure from the outer surface of the battery is required for exhibiting battery performance.

### [4. Embodiments 4]

In the electrical storage device 10X according to Embodiment 2, the location at which the electrode terminal 300 protrudes to the outside is between the lid 400 and the exterior member 101. However, the location at which the electrode terminal 300 protrudes to the outside is not limited thereto. Hereinafter, differences from Embodiment 2 will be mainly described, and description of the same portions as in Embodiment 2 will be omitted.

### <4-1. Configuration of electrical storage device>

Fig. 19 is a plan view schematically showing an electrical storage device 10XA according to Embodiment 4. Fig. 20 is a side view schematically showing the electrical storage device 10XA. The outer packaging 100X of the electrical storage device 10XA includes a pair of long sides 100XA and a pair of short sides 100XB in plan view. An outer packaging 100X is formed by fitting the lid 400 into each of openings along the long side 100XA at both ends of an exterior member 101 wound around an electrode assembly 200. A second seal portion 120X is formed by heat-sealing the exterior member 101 and the lid 400 with the lid 400 fitted in the opening. A through-hole (not shown) is formed in the lid 400. The two electrode terminals 300 protrude from the through-hole of the lid 400 to the outside of the outer packaging 100X. The two electrode terminals 300 have a shape along the long side 100XA of the outer packaging 100X. A small gap between the through-hole and the electrode terminal 300 is filled with, for example, resin. In Embodiment 4, the first seal portion 110 is formed on one of a pair of short sides 100XB.

It is possible to arbitrarily select the location at which the electrode terminal 300 of the lid 400 protrudes in the thickness direction of the electrical storage device 10XA (direction of arrow UD). In Embodiment 4, the electrode terminals 300 protrude from substantially the center of the lid 400 to the outside of the outer packaging 100X in the thickness direction of the electrical storage device 10XA as shown in Fig. 20. The length of the electrode terminal 300 in the depth direction of the electrical storage device 10XA (direction of arrow FB) can be arbitrarily selected. In Embodiment 4, the length of the electrode terminal 300 in the depth direction of the electrical storage device 10XA (direction of arrow FB) is substantially equal to the length of the electrode assembly 200.

### <4-2. Characteristics>

In the electrical storage device 10XA according to Embodiment 4, the electrode terminal 300 is disposed along the long side 100XA with a large length in the depth direction, so that a larger electrode terminal 300 can be used. Therefore, it is possible to provide the high-power electrical storage device 10XA.

### EXAMPLES

Hereinafter, the present embodiment will be described in detail by showing electrical storage devices of Examples and Comparative Examples. However, the present embodiment is not limited to the Examples.

Ingots of aluminum alloys having each composition shown in Tables 1 and 2 (balance represents Al and other inevitable impurities) were provided. The ingots were subjected to homogenization treatment under the conditions shown in Tables 1 and 2, and then hot-rolled at a finish temperature of 330°C to obtain sheet materials having a thickness of 3 mm. Thereafter, aluminum alloy foil samples having a thickness of 40 µm and a width of 1,200 mm were produced by performing cold rolling, intermediate annealing, final cold rolling and final annealing. The conditions for the intermediate annealing and the final annealing are shown in Tables 1 and 2. In Example 11, CAL annealing was performed as intermediate annealing. CAL annealing was performed under the conditions of a temperature rise rate of 70°C/sec, a heating temperature of 420°C, a holding time of 0 sec and a cooling rate of 50°C/sec. In the section of cold rolling in Tables 1 and 2, a sheet thickness immediately before intermediate annealing and the cold rolling ratio up to the above-described sheet thickness are shown. The following tests or measurements were performed on exterior members including aluminum alloy foils produced. Tables 1 to 4 show the results.

### • Tensile strength and breaking elongation

Both tensile strength and breaking elongation were measured in a tensile test. The tensile test was conducted in accordance with JIS Z 2241, where a JIS No. 5 test piece was taken from a sample in such a manner that it was possible to measure the elongation in a direction at 0 ° with respect to the rolling direction, and subjected to the test at a tension rate of 2 mm/min using a universal tensile tester (AGS-X 10 kN manufactured by Shimadzu Corporation).

The elongation is breaking elongation, and was calculated by the following method. First, before the test, the center of the test piece in a longitudinal direction was marked with two lines along a longitudinal direction of the test piece at an interval of 50 mm as a gauge point distance. After the test, the broken surfaces of the aluminum alloy foil were matched with each other, and the distance between the marks was measured. The gauge point distance (50 mm) was subtracted from the distance between the marks to calculate the elongation amount (mm), and the elongation amount was divided by the gauge point distance (50 mm) to determine the elongation (%).

### • Average crystal grain size

Electropolishing was performed on a surface of the aluminum alloy foil using a mixed solution of 20 vol% perchloric acid + 80 vol% ethanol at a voltage of 20 V. Subsequently, the aluminum alloy foil was anodized in a Barker's solution under the condition of a voltage of 30 V. The crystal grains of the treated sample material were observed with an optical microscope. The average crystal grain size was calculated from the photograph by a cutting method defined in JIS G0551.

### • L1 (length of HAGB)/L2 (length of LAGB)

The foil surface was electropolished, and the crystal orientation was then analyzed with a SEM-EBSD apparatus to observe a high-angle grain boundary (HAGB) in which the orientation difference between crystal grains is 15 ° or more and a low-angle grain boundary (LAGB) in which the orientation difference is 2 ° or more and less than 15 °. Four fields of visual with a visual field size of 170 × 340 µm were measured at a magnification of 500 times, the length of HAGB (L1) and the length of LAGB (L2) per unit area in the visual field were determined, and the ratio between the lengths was calculated. The calculated ratios L1/L2 are shown in Tables 3 and 4.

### • Crystal orientation

The representative orientation was set to {112}<111> for Copper orientation and {123 }<634> for R orientation. The density in each of the orientations was obtained by the following method. Incomplete pole figures at {111}, {200} and {220} were measured by an X-ray diffraction method. A crystal orientation distribution function (ODF; Orientation Distribution Function) was determined to obtain orientation densities in Copper orientation and R orientation.

### • Surface analysis

The Mg concentration of the foil surface was estimated by X-ray photoelectron spectroscopy (XPS). The atomic concentration of each element was determined by waveform separation of a narrow spectrum obtained by narrow scan measurement for a surface portion extending from the outermost surface to a depth of 8 mm. For the determination of the Mg amount, a Mg2p spectrum was used. Details of analysis conditions are as follows.
Measuring apparatus: PHI 5000-VersaProbeIII manufactured by ULVAC-PHI, Inc.
Incident X-ray: Al Kα monochromatized X-ray, hv = 1486.6 ev
X-ray source output: 100 W, 20 kV, 5.8 mA
Pass energy: 26 eV
Step: 0.05 eV
Analysis region (beam diameter): 100 µm × 1.4 mm
Detection angle: 45 °
Photoelectron capture angle: 45 degrees
Measurement region: 1.4 mm in X direction at 100 µϕ
Peak shift correction: corrected so as to obtain a C-C peak at 285.0 eV in the C1s peak
Charge neutralization: charge neutralization with dual beams of Ar ions and electron beams

### • Measurement of thickness of oxide film

The thickness of the oxide film was measured with an electron probe micro analyzer (FE-EPMA) apparatus. The thickness of the oxide film of the sample was calculated using a calibration curve of X-ray intensities obtained from oxide film samples each having a known thickness. The FE-EPMA apparatus used was JXA-8530 F from JEOL Ltd. The analysis conditions were an acceleration voltage of 10 kV, an irradiation current of 100 nA and a beam diameter of 50 µm.

### • Piercing strength of aluminum alloy foil

An exterior member including an aluminum alloy foil having a thickness of 40 µm was pierced at a speed of 50 mm/min with a needle having a diameter of 1.0 mm and a tip shape radius of 0.5 mm, and a maximum load (N) until the needle pierced through the foil was measured as a piercing strength. Here, samples having a piercing strength of 9.0 N or more were evaluated as having good piercing resistance. These samples are rated "A" in Tables 3 and 4. Samples having a piercing strength of less than 9.0 N were evaluated as having poor piercing resistance. These samples are rated "C" in Tables 3 and 4.

### • Evaluation of corrosion resistance to electrolytic solution

Each of the aluminum alloy foils used in Examples and Comparative Examples was cut into a rectangle having a length of 45 mm and a width of 15 mm. Next, a rectangular polyethylene film having a length of 50 mm and a width of 20 mm was superposed on the front and back surfaces of the aluminum alloy foil so as to form an exposed portion of 1 cmcp on one of the front and back surfaces of the aluminum alloy foil, and attached by heat-welding to cover the aluminum alloy foil, thereby obtaining a test sample. The corrosion resistance of the test sample was evaluated at a portion of 1 cmϕ where the aluminum alloy foil AL was exposed, and the end part of the test sample which was not immersed in an electrolytic solution was exposed to be connected to a working electrode. Next, the test sample AL was set as a working electrode, and metallic lithium Li (disc shape of 15 mm in diameter and 0.35 mm in thickness) was set as a counter electrode, followed by immersion in an electrolytic solution (including LiPF₆ at 1 mol/l and a mixed liquid of ethylene carbonate, diethyl carbonate and dimethyl carbonate (volume ratio 1 : 1 : 1)). In this state, a voltage of 0.1 V was applied for 1 hour in an environment at 20°C, and a surface of the aluminum alloy foil was then observed. Samples whose surface corroded as in Fig. 3F(B) were rated "C", and samples whose surface had no change as in Fig. 3F(A) were rated "A". Tables 3 and 4 show the results. On a corroded aluminum alloy foil surface, a compound with lithium was generated, and a situation was observed in which the surface bulged due to volume expansion.

### • Corrosion resistance to all-solid electrolyte of aluminum alloy foil

In a glove box, a solid electrolyte (Li2S-P2S5 (75 : 25)) having a thickness of 800 µm and a diameter ϕ of 10 mm was prepared by powder molding. Next, an indium foil (thickness: 0.3 mm and diameter ϕ: 9 mm), a lithium foil (thickness: 0.2 mm and diameter ϕ: 8 mm), and an indium foil (thickness: 0.1 mm and diameter ϕ: 9 mm) were stacked on the solid electrolyte with the indium foil (thickness: 0.1 mm) being on the solid electrolyte side, restrained, and left to stand overnight. Thereafter, the foils were released from the restraint, and on the solid electrolyte on a side opposite to the foils, each of the aluminum alloy foils used in Examples and Comparative Examples was laminated after being cut into ϕ9 mm by punching. The obtained laminate was restrained, and encapsulated in a glass cell with a lead. The laminate was taken out from the glove box, and left to stand for 1 hour for stabilization. In this state, a voltage of -0.53 V was applied for 3 hours or 10 hours in an environment of 25°C, and the amount of electricity per unit area was then calculated. Samples in which the amount of electricity was less than 4C/cm² were rated "A", samples in which the amount of electricity was 4C/cm² were rated "B", and samples in which the amount of electricity was more than 4C/cm² were rated "C". Tables 3 and 4 show the results.

### • Evaluation of followability of exterior member

Each of the thus-obtained exterior members was cut into a square having a length of 100 mm (MD) and a width of 100 mm (TD) to obtain a test sample. This test sample was folded in two with the heat-weld resin layer being on the inner side at the center in the width direction, thereby preparing a two-folded rectangular sample having a length (MD) of 100 mm and a width (TD) of 50 mm. The two-folded sample is held between two metal plates having a width of 200 mm, a length of 200 mm and a thickness of 15 mm and in parallel with the width direction (TD) at the center position in the length (MD) direction. The sample held was repeatedly bent to the left and right by 180°, and the nu s mber of repetitions of bending until generation of cracks in the aluminum was measured. Cracks were observed by applying light from a LED light. The evaluation was performed with N = 5, and the average value thereof was calculated. Samples in which the number of repetitions until generation of cracks was 10 or more were rated "A", and samples in which the number of repetitions until generation of cracks was less than 10 were rated "C". Tables 3 and 4 show the results.

### • Piercing strength of exterior member

For the exterior members obtained as described above, the piercing strength was measured from the base material layer side by a method conforming to the provisions of JIS Z 1707: 1997. Specifically, in a measurement environment at 23 ± 2°C and a relative humidity of 50 ± 5%, a test piece was fixed with a table having a diameter of 115 mm and having an opening of 15 mm at the center, and a pressing plate, and pierced at a speed of 50 ± 5 mm per minute with a semicircular needle having a diameter of 1.0 mm and a tip shape radius of 0.5 mm, and the maximum stress before the needle completely passes through the test piece was measured. The number of test pieces is 5, and an average for the test pieces was determined. In the case where there is a shortage of test pieces so that five test pieces cannot be measured, test pieces available for the measurement are measured, and an average value for the test pieces is determined. As an apparatus for measuring the piercing strength, ZP-50N (force gauge) and MX2-500N (measurement stand) manufactured by IMADA Architects Ltd. were used. Tables 3 and 4 show the results. Samples having a piercing strength of 30 N or more were rated "A", and samples having a piercing strength of 3.0 mm or less were rated "C". Tables 3 and 4 show the results.

**[Table 1]**

| | No. | Chemical component (mass%) | | | | Manufacturing conditions | | | | | | | | |
|---|---|---|---|---|---|---|---|---|---|---|---|---|---|---|
| | | | | | | Homogenization treatment | | Cold rolling | | Intermediate annealing | | Final cold rolling ratio (%) | Final annealing | |
| | | Si | Fe | Mn | Mg | Temperature (°C) | Time (h) | Sheet thickness (mm) | Cold rolling ratio (%) | Temperature (°C) | Time (h) | | Temperature (°C) | Time (h) |
| Aluminum alloy foil used in Example | 1 | 0.15 | 1.2 | 0.03 | 1.0 | 530 | 10 | 0.7 | 76.7 | 360 | 5 | 94.3 | 300 | 5 |
| | 2 | 0.14 | 1.2 | 0.02 | 1.4 | 530 | 10 | 0.7 | 76.7 | 360 | 5 | 94.3 | 300 | 5 |
| | 3 | 0.42 | 1.0 | 0.02 | 1.0 | 530 | 10 | 0.7 | 76.7 | 360 | 5 | 94.3 | 300 | 5 |
| | 4 | 0.22 | 0.6 | 0.01 | 1.2 | 530 | 10 | 0.7 | 76.7 | 360 | 5 | 94.3 | 300 | 5 |
| | 5 | 0.13 | 0.3 | 0.01 | 1.2 | 530 | 10 | 0.7 | 76.7 | 360 | 5 | 94.3 | 300 | 5 |
| | 6 | 0.12 | 1.7 | 0.02 | 1.2 | 530 | 10 | 0.7 | 76.7 | 360 | 5 | 94.3 | 300 | 5 |
| | 7 | 0.10 | 1.9 | 0.02 | 1.4 | 530 | 10 | 0.7 | 76.7 | 360 | 5 | 94.3 | 300 | 5 |
| | 8 | 0.15 | 1.5 | 0.08 | 1.2 | 530 | 10 | 0.7 | 76.7 | 360 | 5 | 94.3 | 300 | 5 |
| | 9 | 0.15 | 1.2 | 0.06 | 1.0 | 530 | 10 | 0.7 | 76.7 | CAL | | 94.3 | 300 | 5 |
| | 10 | 0.15 | 0.6 | 0.03 | 1.2 | 530 | 10 | 0.2 | 93.3 | 360 | 5 | 80.0 | 300 | 5 |
| | 11 | 0.15 | 1.2 | 0.03 | 1.0 | 530 | 10 | 0.5 | 83.3 | 360 | 5 | 92.0 | 300 | 5 |
| | 12 | 0.15 | 1.2 | 0.03 | 1.0 | 500 | 10 | 0.7 | 76.7 | 360 | 5 | 94.3 | 300 | 5 |
| | 13 | 0.15 | 1.1 | 0.04 | 1.1 | 530 | 10 | 0.7 | 76.7 | 360 | 5 | 94.3 | 350 | 5 |
| | 14 | 0.15 | 1.2 | 0.03 | 1.0 | 530 | 10 | 0.7 | 76.7 | 360 | 5 | 94.3 | 280 | 5 |
| | 15 | 0.15 | 1.2 | 0.14 | 1.0 | 530 | 10 | 0.7 | 76.7 | 360 | 5 | 94.3 | 300 | 5 |
| Aluminum alloy foil used in Comparative Example | 16 | 0.14 | 0.1 | 0.03 | 1.2 | 530 | 10 | 0.7 | 76.7 | 360 | 5 | 94.3 | 300 | 5 |
| | 17 | 0.16 | 2.3 | 0.04 | 1.2 | 530 | 10 | 0.7 | 76.7 | 360 | 5 | 94.3 | 300 | 5 |
| | 18 | 0.15 | 1.2 | 0.03 | 0.05 | 530 | 10 | 0.7 | 76.7 | 360 | 5 | 94.3 | 300 | 5 |

**[Table 2]**

| | No. | Chemical component (mass%) | | | | Manufacturing conditions | | | | | | | | |
|---|---|---|---|---|---|---|---|---|---|---|---|---|---|---|
| | | | | | | Homogenization treatment | | Cold rolling | | Intermediate annealing | | Final cold rolling ratio (%) | Final annealing | |
| | | Si | Fe | Mn | Mg | Temperature (°C) | Time (h) | Sheet thickness (mm) | Cold rolling ratio (%) | Temperature (°C) | Time (h) | | Temperature (°C) | Time (h) |
| Aluminum alloy foil used in Example | 22 | 0.15 | 1.2 | 0.03 | 2.5 | 530 | 10 | 0.7 | 76.7 | 360 | 5 | 94.3 | 300 | 5 |
| | 23 | 0.15 | 1.3 | 0.04 | 1.7 | 530 | 10 | 0.7 | 76.7 | 360 | 5 | 94.3 | 300 | 5 |
| | 24 | 0.15 | 1.3 | 0.03 | 4.4 | 530 | 10 | 0.7 | 76.7 | 360 | 5 | 94.3 | 300 | 5 |
| | 25 | 0.16 | 1.1 | 0.03 | 4.9 | 530 | 10 | 0.7 | 76.7 | 360 | 5 | 94.3 | 300 | 5 |
| | 26 | 0.43 | 1.1 | 0.04 | 2.5 | 530 | 10 | 0.7 | 76.7 | 360 | 5 | 94.3 | 300 | 5 |
| | 27 | 0.16 | 0.6 | 0.02 | 2.5 | 530 | 10 | 0.7 | 76.7 | 360 | 5 | 94.3 | 300 | 5 |
| | 28 | 0.14 | 0.3 | 0.02 | 2.5 | 530 | 10 | 0.7 | 76.7 | 360 | 5 | 94.3 | 300 | 5 |
| | 29 | 0.14 | 1.7 | 0.03 | 2.3 | 530 | 10 | 0.7 | 76.7 | 360 | 5 | 94.3 | 300 | 5 |
| | 30 | 0.11 | 1.9 | 0.04 | 2.2 | 530 | 10 | 0.7 | 76.7 | 360 | 5 | 94.3 | 300 | 5 |
| | 31 | 0.16 | 1.4 | 0.08 | 2.4 | 530 | 10 | 0.7 | 76.7 | 360 | 5 | 94.3 | 300 | 5 |
| | 32 | 0.15 | 1.3 | 0.05 | 2.5 | 530 | 10 | 0.7 | 76.7 | CAL | | 94.3 | 300 | 5 |
| | 33 | 0.15 | 0.7 | 0.05 | 2.0 | 530 | 10 | 0.2 | 93.3 | 360 | 5 | 80.0 | 300 | 5 |
| | 34 | 0.13 | 1.3 | 0.06 | 1.7 | 530 | 10 | 0.2 | 93.3 | 360 | 5 | 80.0 | 300 | 5 |
| | 35 | 0.15 | 1.2 | 0.03 | 2.5 | 530 | 10 | 0.5 | 83.3 | 360 | 5 | 92.0 | 300 | 5 |
| | 36 | 0.15 | 1.2 | 0.03 | 2.5 | 500 | 10 | 0.7 | 76.7 | 360 | 5 | 94.3 | 300 | 5 |
| | 37 | 0.15 | 1.1 | 0.03 | 2.6 | 530 | 10 | 0.7 | 76.7 | 360 | 5 | 94.3 | 350 | 5 |
| | 38 | 0.15 | 1.2 | 0.03 | 2.5 | 530 | 10 | 0.7 | 76.7 | 360 | 5 | 94.3 | 280 | 5 |
| | 39 | 0.15 | 1.9 | 0.03 | 1.6 | 530 | 10 | 0.7 | 76.7 | 360 | 5 | 94.3 | 300 | 5 |
| | 40 | 0.15 | 1.2 | 0.14 | 2.5 | 530 | 10 | 0.7 | 76.7 | 360 | 5 | 94.3 | 300 | 5 |
| Aluminum alloy foil used in Comparative Example | 41 | 0.14 | 0.1 | 0.04 | 2.4 | 530 | 10 | 0.7 | 76.7 | 360 | 5 | 94.3 | 300 | 5 |
| | 42 | 0.16 | 2.2 | 0.04 | 2.5 | 530 | 10 | 0.7 | 76.7 | 360 | 5 | 94.3 | 300 | 5 |
| | 43 | 0.15 | 1.2 | 0.05 | 5.5 | 530 | 10 | 0.7 | 76.7 | 360 | 5 | 94.3 | 300 | 5 |

**[Table 3]**

| | No. | Crystal grain structure | | Texture | | Mg concentration (at%) | Oxide film (Å) | Mechanical properties | | Piercing strength of aluminum alloy foil | | Corrosion resistance to electrolytic solution | | Corrosion resistance to all-solid electrolyte | Piercing strength of exterior member | | Followability |
|---|---|---|---|---|---|---|---|---|---|---|---|---|---|---|---|---|---|
| | | Average grain size (µm) | HAGB /LAGB | Copper | R | | | Elongation (%) | Tensile strength (MPa) | Load (N) | Piercing evaluation score | Electrolytic solution corrosion evaluation score | | Electrolytic solution corrosion evaluation score | Load (N) | Piercing evaluation score | Evaluation score |
| | | | | | | | | | | | | 3 hours | 10 hours | | | | |
| Aluminum alloy foil used in Example | 1 | 11.5 | 4.1 | 12.1 | 11.1 | 16.2 | 194 | 14.8 | 150 | 10.1 | A | A | A | A | 31.1 | A | A |
| | 2 | 10.9 | 4.2 | 12.3 | 11.6 | 18.7 | 200 | 16.0 | 173 | 11.1 | A | A | A | A | 32.1 | A | A |
| | 3 | 18.8 | 4.2 | 10.6 | 10.2 | 16.0 | 190 | 11.5 | 155 | 10.0 | A | A | A | A | 31.0 | A | A |
| | 4 | 20.2 | 4.3 | 11.1 | 10.9 | 16.9 | 202 | 14.1 | 164 | 10.5 | A | A | A | A | 31.5 | A | A |
| | 5 | 28.5 | 4.6 | 10.8 | 10.5 | 16.8 | 191 | 11.5 | 161 | 10.3 | A | A | A | A | 31.3 | A | A |
| | 6 | 10.2 | 3.2 | 14.2 | 12.3 | 16.8 | 189 | 15.3 | 166 | 10.5 | A | A | A | A | 31.5 | A | A |
| | 7 | 14.3 | 3.1 | 14.7 | 13.1 | 18.8 | 195 | 11.8 | 167 | 10.2 | A | A | A | A | 31.2 | A | A |
| | 8 | 9.5 | 3.9 | 12.4 | 11.5 | 17.0 | 198 | 14.1 | 169 | 10.6 | A | A | A | A | 31.6 | A | A |
| | 9 | 8.5 | 3.4 | 14.9 | 13.9 | 16.9 | 194 | 11.4 | 162 | 10.4 | A | A | A | A | 31.4 | A | A |
| | 10 | 25.9 | 3.5 | 11.0 | 10.7 | 16.2 | 205 | 10.8 | 161 | 10.2 | A | A | A | A | 31.2 | A | A |
| | 11 | 9.2 | 5.3 | 12.6 | 11.2 | 16.3 | 190 | 16.9 | 162 | 10.3 | A | A | A | A | 31.3 | A | A |
| | 12 | 10.8 | 5.1 | 8.0 | 8.5 | 16.5 | 188 | 17.1 | 153 | 10.1 | A | A | A | A | 31.1 | A | A |
| | 13 | 12.7 | 4.2 | 11.5 | 11.1 | 23.1 | 218 | 14.5 | 147 | 9.8 | A | A | A | A | 30.8 | A | A |
| | 14 | 11.2 | 3.2 | 12.0 | 10.9 | 5.1 | 71 | 13.7 | 159 | 10.1 | A | A | B | A | 31.1 | A | A |
| | 15 | 9.1 | 3.4 | 13.8 | 12.5 | 16.0 | 190 | 13.6 | 154 | 10.1 | A | A | A | A | 31.1 | A | A |
| Aluminum alloy foil used in Comparative Example | 16 | 32.1 | 4.3 | 7.4 | 7.9 | 166 | 198 | 9.1 | 160 | 10.5 | A | A | A | A | 31.5 | A | C |
| | 17 | 19.4 | 3.1 | 16.7 | 14.6 | 16.5 | 198 | 8.0 | 166 | 10.4 | A | A | A | A | 31.4 | A | C |
| | 18 | 13.3 | 2.7 | 140 | 11.4 | 3.9 | 81 | 20.3 | 98 | 8.4 | C | C | C | C | 28.9 | C | A |

**[Table 4]**

| | No. | Crystal grain structure | | Texture | | Mg concentration (at%) | Oxide film (Å) | Mechanical properties | | Piercing strength of aluminum alloy foil | | Corrosion resistance to electrolytic solution | | Corrosion resistance to all-solid electrolyte | Piercing strength of exterior member | | Followability |
|---|---|---|---|---|---|---|---|---|---|---|---|---|---|---|---|---|---|
| | | Average grain size (µm) | HAGB /LAGB | Copper | R | | | Elongation (%) | Tensile strength (MPa) | Load (N) | Piercing evaluation score | Electrolytic solution corrosion evaluation score | | Electrolytic solution corrosion evaluation score | Load (N) | Piercing evaluation score | Evaluation score |
| | | | | | | | | | | | | 3 hours | 10 hours | | | | |
| Aluminum alloy foil used in Example | 22 | 12.2 | 4.3 | 11.7 | 10.8 | 22.7 | 205 | 17.4 | 220 | 12.5 | A | A | A | A | 33.5 | A | A |
| | 23 | 13.4 | 3.5 | 13.2 | 10.6 | 19.4 | 194 | 15.8 | 182 | 11.9 | A | A | A | A | 32.9 | A | A |
| | 24 | 11.9 | 3.8 | 12.6 | 10.1 | 23.4 | 359 | 21.6 | 298 | 14.7 | A | A | A | A | 35.7 | A | A |
| | 25 | 12.2 | 4.4 | 11.9 | 11.3 | 24.4 | 384 | 22.3 | 310 | 15.0 | A | A | A | A | 36.0 | A | A |
| | 26 | 18.0 | 4.4 | 10.3 | 9.9 | 22.4 | 204 | 15.6 | 209 | 12.3 | A | A | A | A | 33.3 | A | A |
| | 27 | 200 | 4.5 | 10.8 | 10.6 | 23.7 | 207 | 16.8 | 214 | 12.4 | A | A | A | A | 33.4 | A | A |
| | 28 | 26.6 | 4.8 | 10.5 | 10.2 | 23.5 | 204 | 15.3 | 209 | 12.3 | A | A | A | A | 33.3 | A | A |
| | 29 | 10.5 | 3.4 | 13.8 | 11.9 | 23.5 | 202 | 17.9 | 211 | 12.4 | A | A | A | A | 33.4 | A | A |
| | 30 | 140 | 3.3 | 14.3 | 12.7 | 20.8 | 201 | 15.6 | 204 | 12.2 | A | A | A | A | 33.2 | A | A |
| | 31 | 10.0 | 4.1 | 12.0 | 11.2 | 23.8 | 204 | 17.0 | 222 | 12.6 | A | A | A | A | 33.6 | A | A |
| | 32 | 9.1 | 3.6 | 14.5 | 13.5 | 23.6 | 203 | 15.7 | 229 | 12.3 | A | A | A | A | 33.3 | A | A |
| | 33 | 25.9 | 3.7 | 10.7 | 10.4 | 22.7 | 193 | 15.3 | 200 | 12.2 | A | A | A | A | 33.2 | A | A |
| | 34 | 12.9 | 3.8 | 11.3 | 10.7 | 19.3 | 201 | 15.2 | 176 | 11.4 | A | A | A | A | 32.4 | A | A |
| | 35 | 10.4 | 5.6 | 12.2 | 10.9 | 22.8 | 203 | 18.3 | 224 | 12.7 | A | A | A | A | 33.7 | A | A |
| | 36 | 10.9 | 5.4 | 7.8 | 8.2 | 23.1 | 203 | 18.7 | 225 | 12.6 | A | A | A | A | 33.6 | A | A |
| | 37 | 13.5 | 4.4 | 11.2 | 10.8 | 28.4 | 264 | 16.8 | 214 | 12.3 | A | A | A | A | 33.3 | A | A |
| | 38 | 11.9 | 3.4 | 11.6 | 10.6 | 18.7 | 102 | 16.0 | 227 | 12.6 | A | A | B | A | 33.6 | A | A |
| | 39 | 14.4 | 3.3 | 15.5 | 14.0 | 13.6 | 188 | 15.3 | 187 | 11.7 | A | A | A | A | 32.7 | A | A |
| | 40 | 10.1 | 3.6 | 13.4 | 12.1 | 22.4 | 204 | 16.9 | 224 | 12.6 | A | A | A | A | 33.6 | A | A |
| Aluminum alloy foil used in Comparative Example | 41 | 30.9 | 4.5 | 7.2 | 7.7 | 22.1 | 196 | 14.4 | 216 | 12.4 | A | A | A | A | 33.4 | A | C |
| | 42 | 18.7 | 3.3 | 16.2 | 14.2 | 22.2 | 198 | 11.5 | 199 | 12.0 | A | A | A | A | 33.0 | A | C |
| | 43 | 11.4 | 3.7 | 11.6 | 11.3 | 25.6 | 396 | 23.4 | 340 | 15.9 | A | A | A | A | 36.9 | A | C |

### <Manufacturing of exterior member>

As a base material layer, a laminated film was prepared in which a polyethylene terephthalate film (12 µm), an adhesive agent layer (two-liquid curable urethane adhesive (polyol compound and aromatic isocyanate compound), thickness: 3 µm) and a biaxially stretched nylon film (thickness: 15 µm) were laminated in this order. Next, a barrier layer including the aluminum alloy foil (having compositions as in Tables 1 and 2 and properties as in Tables 3 and 4, and having a thickness of 40 µm) with an acid-resistant film formed on both surfaces was laminated on a biaxially stretched nylon film (thickness: 15 µm) of the base material layer by a dry lamination method. Specifically, to one surface of the aluminum alloy foil with an acid-resistant film (film formed by chromate treatment and having a chrome content of 30 mg/m²) formed on both surfaces, a two-liquid curable urethane adhesive (polyol compound and aromatic isocyanate compound) was applied to form an adhesive agent layer (thickness after curing: 3 µm) was formed on the aluminum alloy foil. The adhesive agent layer on the aluminum alloy foil and the biaxially stretched nylon film were then laminated, and aging treatment was then performed to prepare a laminate of base material layer/adhesive agent layer/barrier layer. Next, maleic anhydride-modified polypropylene (thickness: 40 µm) as an adhesive layer and polypropylene (thickness: 40 µm) as a heat-sealable resin layer were co-extruded onto the barrier layer of the obtained laminate to laminate an adhesive layer and a heat-sealable resin layer on the barrier layer. Next, the obtained laminate was aged and heated to obtain an exterior member in which a polyethylene terephthalate film (12 µm), an adhesive agent layer (3 µm), a biaxially stretched nylon film (15 µm), an adhesive agent layer (3 µm), a barrier layer (40 µm), an adhesive layer (40 µm) and a heat-sealable resin layer (40 µm) were laminated in this order.

On each of both surfaces of the exterior member, erucic acid amide was applied as a slipping agent to form a slipping agent layer.

The exterior member of the electrical storage device of each of Examples 1 to 15 and 22 to 40 includes a laminate including at least a base material layer, a barrier layer and a heat-sealable resin layer in the stated order, and the barrier layer includes an aluminum alloy foil that satisfies a composition of a Fe content of 0.2 mass% or more and 2.0 mass% or less and a Mg content of 0.1 mass% or more and 5.0 mass% or less. In the exterior members of Examples 1 to 15 and 22|40, the exterior member is excellent in followability at corners and the like, corrosion of the aluminum alloy foil is effectively suppressed if an electrical current is generated while an electrolytic solution is deposited, and high mechanical strength is exhibited.

### [5. Modification]

While Embodiments 1 to 4 have been described above, the present invention is not limited to Embodiments 1 to 4, and various modifications can be made without departing from the gist of the present invention. Hereinafter, modifications will be described.

<5-1> In Embodiments 1 to 4, one exterior member was wound around the electrode assembly 200. However, the number of exterior members wound around the electrode assembly 200 is not necessarily 1. For example, two or more exterior members may be wound around the electrode assembly 200.

Fig. 21 is a view showing, from the side, a state in which exterior members 101Z1 and 101Z2 are wound around the electrode assembly 200 in the course of manufacturing the electrical storage device in the modification. As shown in Fig. 21, the periphery of the electrode assembly 200 is covered with the exterior members 101Z1 and 101Z2. A first seal portion 110Z is formed by joining opposed surfaces of the exterior members 101Z1 and 101Z2. In this example, each first seal portion 110Z is not bent to the first surface 130Z side, but bent to the second surface 140Z side. Even with this configuration, it is possible to exhibit an effect of suppressing unevenness of the distribution of pressure applied to a lower electrical storage device when a plurality of electrical storage device are stacked. In the case of use for an all-solid-state battery, the packaging form according to the present invention is preferable because even application of high pressure from the outer surface of the battery is required for exhibiting battery performance. In this example, each first seal portion 110Z is not necessarily bent. In this modification, each seal portion 110Z may be sealed with a part of the electrode terminal 300 held therein. In this modification, each first seal portion 110Z is not required to be formed on the side 135Z, and may protrude outward from substantially the center of the second surface 140Z in the thickness direction of the electrical storage device.

<5-2> In Embodiments 1 to 4, the electrode assembly 200 is a so-called stack type formed by laminating a plurality of electrodes 210, but the form of the electrode assembly 200 is not limited thereto. For example, the electrode assembly 200 may be of so-called winding type configured such that a positive electrode and a negative electrode are wound with a separator interposed therebetween. The electrode assembly 200 may be formed by laminating a plurality of so-called winding-type electrode assemblies.

<5-3> In Embodiments 1 to 4, the second surface 140 is a flat surface extending downward substantially at right angle from the first surface 130. However, the form of the second surface 140 is not limited thereto. For example, assume that the electrode assembly 200 is a winding-type electrode assembly, and a flat surface and a curved surface are formed on an outer periphery thereof is considered. Here, assume that the area of the flat surface is larger than the area of the curved surface, the first surface 130 covers the flat surface of the electrode assembly, and the second surface 140 covers the curved surface of the electrode assembly. In this case, the second surface 140 may be formed by a curved surface. In this case, a boundary portion where the second surface 140 extends downward from the first surface 130 is the side 135.
<5-4> In Embodiment 3, the joined region 151 is formed at four locations. However, the number of locations at which the joined region 151 is formed is not limited thereto. For example, the joined region 151 may be formed at two locations near both ends along the side 135 or at only one location near the center of the side 135, or may be formed at five or more locations.
<5-5> In Embodiment 1, the electrode terminal 300 is disposed in the second seal portion 120, but the location at which the electrode terminal 300 is disposed in the outer packaging 100 is not limited thereto. For example, as shown in Fig. 22, the electrode terminal 300 can also be disposed in the first seal portion 110. In other words, the first seal portion 110 is sealed with the electrode terminal 300 held therein. In this modification, at least one of the two electrode terminals 300 may be bent toward the second surface 140, or toward a side opposite to the second surface 140, or is not required to be bent so as to protrude outward from the side 135. In this modification, the electrode terminal 300 and the first seal portion 110 can be easily sealed, so that the sealing property of the outer packaging 100 is enhanced. In addition, the electrode assembly 200 can be easily housed in the outer packaging 100. In this modification, for example, the lid 400 is fitted into each of the openings at both ends of the exterior member 101 as in the above-described Embodiment 2. A second seal portion 120 is formed by heat-sealing the exterior member 101 and the lid 400 with the lid 400 fitted in the opening.
<5-6> In Embodiment 2, the configuration of the lid 400 can be arbitrarily changed. Fig. 23 is a perspective view showing a lid 500 which is a modification of the lid 400. The lid 500 has, for example, a plate shape, and includes a first surface 500A facing the electrode assembly 200 (see Fig. 9) and a surface 500B on a side opposite to the first surface 500A. A hole 500C extending through the first surface 500A and the second surface 500B is formed at the center of the lid 500. The material for forming the lid 500 is, for example, resin. In this modification, it is preferable that an adhesive film 530 which is bonded to both the electrode terminal 300 and the lid 500 is attached to a predetermined area including a portion of the electrode terminal 300 which is joined to the 500. The lid 500 may be formed of a member divided into a first portion 510 and a second portion 520, and may be manufactured by joining the first portion 510 and the second portion 520 with the electrode terminal 300 and the adhesive film 530 sandwiched therebetween. The lid 500 may be manufactured by insert-molding the lid 500 with respect to the electrode terminal 300 to which the adhesive film 530 is attached. In this modification, it is preferable that a barrier layer is laminated to at least a part of a surface of the lid 500. Alternatively, when the lid 500 has a plurality of layers, a barrier layer may be formed on an arbitrary layer. The material for forming the barrier layer is, for example, aluminum. In this modification, if a gap is generated between the adhesive film 530 and the hole 530C, it is preferable to fill the gap with, for example, a resin material such as hot-melt resin.

In this modification, the second seal portion 120X is formed by joining the exterior member 101 and the second surface 500B of the lid 500 with the lid 500 fitted in the outer packaging 100X as shown in Fig. 24. Means for joining the exterior member 101 and the second surface 500B of the lid 500 is, for example, heat sealing. In this modification, the exterior member 101 is joined to the lid 500 over a wider range, so that the sealing property of the outer packaging 100X is enhanced.

Fig. 25 is a front view of a lid 600 which is another modification of the lid 400 in Embodiment 2. The lid 600 includes a metal portion 610 where a metal is exposed to a surface thereof, and the metal portion 610 and the electrode 210 of the electrode assembly 200 are welded to each other. The lid 600 may include only the metal portion 610 in its entirety, or the metal portion 610 may be partially formed in the lid 600. When the metal portion 610 is partially formed, the lid 600 is formed of a material of multilayer structure which includes a metal layer. When the lid 600 is formed of a material of multilayer structure with a metal layer as an intermediate layer, the metal portion 610 is a portion where layers other than the metal layer are partially removed so that the metal layer is exposed. In the example shown in Fig. 25, the metal portion 610 of the lid 600 functions as an electrode terminal, so that a space between the lid 600 and the electrode 210 becomes unnecessary. Therefore, it is possible to downsize the electrical storage device 10X (see Fig. 9).

Fig. 26 is a front view of a lid 700 which is another modification of the lid 400 in Embodiment 2. The lid 700 includes a metal portion 710 formed of a metal material, and a non-metal portion 720 connected to the metal portion 710 and formed of a resin material. The metal portion 710 is welded to the electrode 210 of the electrode assembly 200. In the example shown in Fig. 26, the metal portion 710 of the lid 700 functions as an electrode terminal, so that a space between the lid 700 and the electrode 210 becomes unnecessary. Therefore, it is possible to downsize the electrical storage device 10X (see Fig. 9).

<5-7> In Embodiment 1, the second seal portion 120 is formed by folding the exterior member 101 and heat-sealing the heat-sealable resin layers of the exterior member 101. However, the method for forming the second seal portion 120 is not limited thereto. Fig. 27 is a plan view schematically showing the electrical storage device 10 including a second seal portion 120Y in the modification. The exterior member 101 includes a bulging portion 101X extending to the outside of the outer packaging 100, and the heat-sealable resin layers of the bulging portion 101X are heat-sealed to form the second seal portion 120Y. In a portion of the bulging portion 101X where the electrode terminal 300 is disposed, the heat-sealable resin layer of the bulging portion 101X and the electrode terminal 300 are heat-sealed. According to this modification, the second seal portion 120Y can be more firmly heat-sealed, so that the sealing property of the outer packaging 100 is enhanced. In this modification, regions of the bulging portion 101X other than the portion heat-sealed to the electrode terminal 300 may be cut if necessary. This modification can also be applied to the modification shown in Fig. 22.

### DESCRIPTION OF REFERENCE SIGNS

10, 10X, 10XA, 10Y, 10Z: Electrical storage device
100, 100X, 100Y: Outer packaging
101, 101Y, 101Z1, 101Z2: Exterior member
101A: Base material layer
101C: Barrier layer
101D: Heat-sealable resin layer
101X: Bulging portion
110, 110Z, 154: First seal portion
120, 120X, 120Y: Second seal portion
130, 130Z: First surface
135, 135Z: Side
140, 140Z: Second surface
150: Piece portion
151: Joined region
152: Space
153: Non-joined region
200: Electrode assembly
210: Electrode
215: Current collector
300: Electrode terminal
500A: First surface
500B: Second surface
400, 500, 700: Lid
610, 710: Metal portion
C1: Corner

## Claims

1. An electrical storage device comprising:
an electrode assembly; and
an outer packaging that seals the electrode assembly, wherein
the outer packaging includes a film-shaped exterior member,
the outer packaging includes a first seal portion sealed by joining opposed surfaces of the exterior member wound around the electrode assembly, a first surface, and a second surface,
an area of the first surface is larger than an area of the second surface,
the first seal portion does not overlap the first surface in plan view,
the exterior member includes a laminate including at least a base material layer, a barrier layer and a heat-sealable resin layer in the stated order, and
the barrier layer includes an aluminum alloy foil that satisfies a composition of a Fe content of 0.2 mass% or more and 2.0 mass% or less, and a Mg content of 0.1 mass% or more and 5.0 mass% or less.

2. The electrical storage device according to claim 1, wherein the first seal portion is bent so as to come into contact with the second surface.

3. The electrical storage device according to claim 2, wherein the first seal portion covers substantially the entire second surface in a state of being bent so as to come into contact with the second surface.

4. The electrical storage device according to any one of claims 1 to 3, further comprising an electrode terminal electrically connected to the electrode assembly, wherein
the outer packaging further includes a second seal portion sealed with the electrode terminal held therein,
a part of the electrode terminal is located outside the outer packaging, and
a root of the part is located to extend over substantially half a thickness of the electrical storage device in a thickness direction of the electrical storage device.

5. The electrical storage device according to any one of claims 1 to 3, wherein a region with a high joining force between the surfaces and a region with a low joining force between the surfaces are arranged along a boundary between the first surface and the second surface in the first seal portion.

6. The electrical storage device according to any one of claims 1 to 3, wherein a thin region and a thick region are arranged along a boundary between the first surface and the second surface in the first seal portion.

7. The electrical storage device according to any one of claims 1 to 3, further comprising an electrode terminal electrically connected to the electrode assembly, wherein the first seal portion is sealed with the electrode terminal held therein.

8. The electrical storage device according to any one of claims 1 to 3, further comprising:
an electrode terminal electrically connected to the electrode assembly; and
a lid to which the electrode terminal is attached, wherein
the outer packaging further includes a second seal portion sealed in a state of being joined to the lid.

9. The electrical storage device according to claim 8, wherein
the lid includes a first surface facing the electrode assembly, and a second surface on a side opposite to the first surface, and
the second seal portion includes a portion where the outer packaging and the second surface are joined.

10. The electrical storage device according to any one of claims 1 to 3, further comprising a lid, wherein
the outer packaging further includes a second seal portion sealed in a state of being joined to the lid,
the lid includes a metal portion that is a portion where a metal layer is exposed to a surface thereof or a portion formed of a metal material, and
the metal portion and the electrode assembly are welded to each other.

11. The electrical storage device according to any one of claims 1 to 3, further comprising an electrode terminal electrically connected to the electrode assembly, wherein the outer packaging further includes a bulging portion protruding outward, and a second seal portion sealed by the bulging portion with the electrode terminal held therein.

12. The electrical storage device according to any one of claims 1 to 3, wherein a direction along a boundary between the first surface and the second surface is a direction perpendicular to a machine direction of the exterior member.

13. An electrical storage device comprising:
an electrode assembly;
an electrode terminal electrically connected to the electrode assembly; and
an outer packaging that seals the electrode assembly, wherein
the outer packaging includes a film-shaped exterior member, and has a long side and a short side in plan view,
the electrode terminal is disposed along the long side,
the exterior member includes a laminate including at least a base material layer, a barrier layer and a heat-sealable resin layer in the stated order, and
the barrier layer includes an aluminum alloy foil that satisfies a composition of a Fe content of 0.2 mass% or more and 2.0 mass% or less, and a Mg content of 0.1 mass% or more and 5.0 mass% or less.

14. An electrical storage device comprising:
an electrode assembly; and
an outer packaging that seals the electrode assembly, wherein
the outer packaging includes a film-shaped exterior member,
the outer packaging includes a piece portion formed by joining peripheral edges of opposed surfaces of the exterior member wound around the electrode assembly,
a space in which the opposed surfaces are not joined is formed in the piece portion,
a region in which the opposed surfaces are joined and a region in which the opposed surfaces are not joined are arranged near a boundary between the surfaces in the piece portion,
the exterior member includes a laminate including at least a base material layer, a barrier layer and a heat-sealable resin layer in the stated order, and
the barrier layer includes an aluminum alloy foil that satisfies a composition of a Fe content of 0.2 mass% or more and 2.0 mass% or less, and a Mg content of 0.1 mass% or more and 5.0 mass% or less.

15. The electrical storage device according to any one of claims 1 to 3, wherein the composition of the aluminum alloy foil satisfies a Si content of 0.5 mass% or less.

16. The electrical storage device according to any one of claims 1 to 3, wherein
the composition of the aluminum alloy foil satisfies a Mg content of 0.1 mass% or more and 1.5 mass% or less, and
the electrical storage device contains Mg in an amount of 5.0 atm% or more on at least one surface of the aluminum alloy foil, and has an oxide film with a thickness of 80 Å or more on at least one surface of the aluminum alloy foil.

17. The electrical storage device according to any one of claims 1 to 3, wherein
the composition of the aluminum alloy foil satisfies a Mg content of 0.1 mass% or more and 1.5 mass% or less, and
the aluminum alloy foil has a tensile strength of 110 MPa or more and 180 MPa or less, and a breaking elongation of 10% or more.

18. The electrical storage device according to any one of claims 1 to 3, wherein
the composition of the aluminum alloy foil satisfies a Mg content of more than 1.5 mass% and 5.0 mass% or less, and
the electrical storage device contains Mg in an amount of 15.0 atm% or more on at least one surface of the aluminum alloy foil, and has an oxide film with a thickness of 120 Å or more on at least one surface of the aluminum alloy foil.

19. The electrical storage device according to any one of claims 1 to 3 or claim 18, wherein the composition of the aluminum alloy foil satisfies a Mg content of more than 1.5 mass% and 5.0 mass% or less, and the aluminum alloy foil has a tensile strength of 180 MPa or more, and a breaking elongation of 15% or more.

20. The electrical storage device according to any one of claims 1 to 3, wherein the aluminum alloy foil has a texture orientation density of 15 or less in each of Copper orientation and R orientation.

21. The electrical storage device according to any one of claims 1 to 3, wherein the aluminum alloy foil has an average crystal grain size of 25 µm or less.

22. The electrical storage device according to any one of claims 1 to 3, wherein the aluminum alloy foil contains Al and an inevitable impurity as a balance, and satisfies a relationship of L1/L2 > 3.0, where L1 is a length of a high-angle grain boundary and L2 is a low-angle grain boundary per unit area as measured by an electron backscatter diffraction method.

23. The electrical storage device according to claim 22, wherein the aluminum alloy foil contains Mn in an amount of 0.1 mass% or less as the inevitable impurity.

24. A method for manufacturing an electrical storage device from an incomplete article,
the incomplete article comprising:
an electrode assembly; and
an outer packaging that seals the electrode assembly, wherein
the outer packaging includes a film-shaped exterior member,
the outer packaging includes a piece portion formed by joining peripheral edges of opposed surfaces of the exterior member wound around the electrode assembly,
a space in which the opposed surfaces are not joined is formed in the piece portion,
a region in which the opposed surfaces are joined and a region in which the opposed surfaces are not joined are arranged near a boundary between the surfaces in the piece portion,
the exterior member includes a laminate including at least a base material layer, a barrier layer and a heat-sealable resin layer in the stated order, and
the barrier layer includes an aluminum alloy foil that satisfies a composition of a Fe content of 0.2 mass% or more and 2.0 mass% or less, and a Mg content of 0.1 mass% or more and 5.0 mass% or less,
the method comprising the steps of:
releasing the outer packaging from the sealed state in the piece portion to discharge gas to outside of the outer packaging; and
sealing the outer packaging again by joining the opposed surfaces in at least a part of the piece portion.
